# FASCICULE DE BREVET EUROPEEN

(11) **EP 3 691 110 B1**
(45) Date de publication et mention de la délivrance du brevet: **27.10.2021**
(21) Numéro de dépôt: 20155270.0
(22) Date de dépôt: 04.02.2020
(51) Int. Cl.: H02N 2/10, H02N 2/00

(54) **MECANISME DE DEPLACEMENT NANOMETRIQUE A VIS**
NANOMETRISCHER VERSCHIEBUNGSMECHANISMUS MITHILFE EINER SCHRAUBE
MECHANISM FOR NANOMETRIC MOVEMENT WITH SCREW

(30) Priorité: 04.02.2019 FR 1901082
(43) Date de publication de la demande: 05.08.2020
(73) Titulaire: Cedrat Technologies, 38240 Meylan (FR)
(72) Inventeur: BARILLOT, François, 38190 BERNIN (FR); BELLY, Christian, 38610 GIERES (FR); GUIGNABERT, Adrien, 38240 MEYLAN (FR)
(74) Mandataire: Talbot, Alexandre

(56) Documents cités:
- WO-A1-2010/109826
- CN-A- 102 651 623
- JP-A- 2010 028 955
- JP-A- 2011 169 254
- US-A1- 2003 010 146

## Description

### Domaine technique

L'invention concerne un mécanisme de positionnement linéaire.

### Technique antérieure

Les vis motorisées sont utilisées pour réaliser des actionneurs linéaires de positionnement longue course offrant un maintien en position, par exemple pour assurer des fonctions de focalisation en optique.

Le concept d'actionneur électromécanique de type vis motorisée le plus courant, est décrit par exemple dans le document US2003010146A. L'actionneur électromécanique comporte un motoréducteur électrique qui fait tourner une vis qui entraîne en translation une pièce de type écrou à laquelle est fixée une partie mobile guidée. La rotation de la vis par rapport à l'écrou cause le déplacement en translation de l'écrou.

Cette configuration présente plusieurs inconvénients. Le motoréducteur est un élément lourd. Il en ressort que l'actionneur électromécanique est souvent très encombrant latéralement et/ou très long suivant l'axe d'actionnement. De plus, à cause des jeux du motoréducteur, la résolution et la précision de positionnement sont limitées.

Pour améliorer la compacité et la précision d'un actionneur électromécanique de type vis motorisée, une solution consiste à motoriser une vis par un moteur piézoélectrique en entraînement direct. Dans le document US2012314269, le moteur est un moteur ultrasonore muni d'un stator vibrant piézoélectrique qui entraîne par frottement un rotor incluant un écrou dont la rotation permet de faire tourner une vis en générant son mouvement linéaire d'avance ou de recul. Ainsi, la rotation de l'écrou entraine la vis qui supporte une charge à positionner. La charge à positionner est entrainée par l'extrémité de la vis par mise en contact pressant avec l'extrémité de la vis, via un ressort.

L'un des inconvénients de cette configuration est que la charge n'est pas solidaire de la vis qui l'entraîne, malgré le ressort. Il est alors possible que la charge se désolidarise au moins partiellement de la vis d'entraînement en cas de vibrations élevées ou de chocs. Ces chocs sont communément rencontrés dans des applications embarquées, par exemple en applications aéronautiques ou spatiales. La désolidarisation va se traduire par des décollements qui génèrent des chocs locaux entre la charge et la vis. Ces chocs locaux induisent des endommagements de la zone de contact pressant et la création de particules. Il y a alors une usure rapide de l'actionneur électromécanique avec la perte de la qualité de surface, ce qui est très défavorable à du positionnement de haute précision. Les particules d'usure peuvent se loger dans les filets des vis, ce qui est aussi défavorable pour assurer du positionnement de haute précision. Il apparaît également que la configuration présentée dans le document US2012314269 n'est pas adaptée pour supporter des efforts externes importants. La chaîne d'effort entre la charge et le bâti passe par des roulements, qui sont un point faible dans les mécanismes.

De plus, le rotor qui sert à faire tourner la vis est entraîné sur sa surface cylindrique par frottement, par un fonctionnement de type glissement/adhérence, via un stator piézoélectrique excité électriquement et mis en oscillations vibratoires. Chaque oscillation du stator entraîne la surface cylindrique du rotor typiquement de 10 microns tangentiellement. La rotation complète d'un rotor de 16 mm de rayon R est effectuée avec environ 10 000 oscillations, et assure l'avancement de la vis d'un pas, soit typiquement 1mm. La résolution linéaire du mécanisme est donc de 100nm.

Il est théoriquement possible d'améliorer la résolution linéaire en utilisant des pas plus fins. Cependant, les pas de vis plus fins sont également moins résistants mécaniquement aux vibrations et aux chocs rencontrés dans les applications embarquées, et incompatibles avec la transmission d'efforts élevés.

Pour réduire encore l'encombrement de l'actionneur électromécanique, une solution consiste à réaliser de l'entraînement direct de vis par entraînement piézoélectrique. Une telle solution est présentée dans le document JPH08251950, la vis est entrainée en rotation par frottement et plus particulièrement par glissement-adhérence au niveau du filet du rotor à l'aide d'un stator piézoélectrique excité par un signal de type dent de scie asymétrique, suivant le principe des moteurs inertiels. Le principe du moteur inertiel piézoélectrique est décrit par exemple dans le document EP0292989 de T. Higuchi. Dans le document JPH08251950, la charge à positionner est entraînée aussi par simple mise en contact avec l'extrémité de la vis. Deux mâchoires munies d'un pas de vis se déplacent l'une par rapport à l'autre ce qui entraine le déplacement de la vis prise entre les deux mâchoires.

Les inconvénients de cette réalisation sont identiques à la configuration précédente. La charge se déplace par rapport à la vis mobile en rotation et en translation de sorte que la charge peut se décoller de la vis d'entraînement en cas de chocs ou de vibrations élevées, ce qui n'est pas acceptable dans des applications embarquées. Il ressort également que la configuration présentée dans le document JPH08251950 ne peut pas supporter des efforts externes importants car la chaîne d'effort entre la charge et le bâti passe par le stator piézoélectrique. Or, les matériaux piézoélectriques présentent des limites très faibles lorsqu'ils sont soumis à des efforts de traction.

Il ressort enfin que la configuration du document JPH08251950 utilise le pas de vis de la vis mobile en rotation et en translation comme la surface d'entraînement par friction de la vis. Ce pas de vis soumis à des frottements importants et s'use ce qui introduit du jeu dans la vis. Ce jeu dû à l'usure de la vis réduit rapidement la précision du mécanisme avec le temps.

Le document JP2010028955 décrit un actionneur vibrant dans lequel un stator s'incline pour actionner un rotor relié à une roue dentée. Un ressort est contraint à l'intérieur du rotor pour assurer le contact entre la roue dentée et une plaque supérieure et pour assurer le contact entre le rotor et le stator quand le stator se déforme.

Le document JP2011169254 traite d'un dispositif d'actionnement rotatif éolien. Le dispositif comporte un élément de support associé à un capot. L'élément de support et le capot 30 sont ajourés pour autoriser l'introduction d'un arbre rotatif. Un rotor est monté dans le capot et comporte des pales pour actionner le rotor en rotation par un flux d'air.

Le document CN 102651623 traite d'un moteur piézoélectrique rotatif. Le moteur piézoélectrique comporte un arbre monté entre une plaque supérieure et une plaque inférieure. Le moteur comporte également un rotor associé à une plaque de frottement annulaire qui coopère avec un actionneur piézoélectrique. L'arbre est fixé au rotor et à un disque de sorte que tous ces éléments tournent ensemble. Le rotor est fixé à l'arbre au moyen des vis qui s'introduisent dans les trous de l'arbre.

Le document WO 2010/109826 traite d'un actionneur qui possède une plaque inférieure, une plaque de montage, deux écrous, un jeu de convertisseurs électromécaniques faisant partie du stator et un rotor comportant des dents pour définir un engrenage. L'actionneur possède également un arbre et un ressort.

### Objet de l'invention

L'invention a pour but de remédier à ces inconvénients et, plus particulièrement, de fournir un mécanisme de déplacement capable de supporter des efforts externes élevés tout en autorisant des positionnements de grandes précisions et notamment dans la gamme nanométrique, et avantageusement de fournir un mécanisme destiné aux applications embarquées.

Selon l'invention, ce but est atteint par un mécanisme de déplacement linéaire d'un arbre de sortie qui comporte :
- un rotor présentant une première partie filetée et une surface d'entraînement circulaire mobile en rotation autour d'un axe,
- un cadre définissant une première partie filetée coopérant avec la première partie filetée du rotor, la rotation du rotor par rapport au cadre causant la translation du rotor par rapport au cadre selon l'axe,
- un arbre de sortie lié au rotor,
- un stator configuré pour générer des micro-mouvements de rotation du rotor, le stator étant destiné à être mis en contact de la surface d'entraînement circulaire pour déplacer la surface d'entraînement circulaire et causer la rotation du rotor.

Le mécanisme est remarquable en ce que :
- le rotor comporte une deuxième partie filetée séparée de la première partie filetée par une partie centrale comprenant la surface d'entraînement circulaire,
- un dispositif de blocage est configuré pour empêcher la rotation de l'arbre de sortie autour de l'axe par rapport au cadre,
- l'arbre de sortie possède une deuxième partie destinée à fixer une charge à déplacer et une première extrémité filetée coopérant avec la deuxième partie filetée du rotor, la rotation du rotor par rapport au cadre causant la translation de l'arbre de sortie par rapport au rotor et au cadre selon l'axe.

Préférentiellement, le rotor définit une zone creuse et la surface d'entraînement circulaire est une surface interne du rotor.

Selon un développement de l'invention, le dispositif de blocage est flexible selon l'axe et le dispositif de blocage comporte avantageusement au moins une membrane ajourée formée de plusieurs lames minces agencées en nid d'abeille, en spirales, en croix ou en cercles concentriques.

Selon un développement de l'invention, le stator comporte un l'oscillateur alimenté par un circuit de contrôle délivrant des signaux électriques à un excitateur comportant au moins un actionneur piézoélectrique pour causer la déformation de l'excitateur.

Selon un développement de l'invention, l'excitateur présente une symétrie de rotation dans un plan perpendiculaire à l'axe. L'excitateur comporte un support définissant plusieurs bras et plusieurs actionneurs piézoélectriques, chaque actionneur piézoélectrique étant fixé à un bras du support par une articulation flexible.

Selon un autre développement de l'invention, les actionneurs piézoélectriques possèdent chacun une coque définissant un logement pour un empilement piézoélectrique, la coque et l'empilement piézoélectrique étant configurés de sorte qu'une déformation d'une première valeur de l'empilement piézoélectrique selon une première direction cause une déformation de la coque d'une deuxième valeur supérieure à la première valeur selon une seconde direction, la coque étant connectée au support selon la seconde direction.

Selon un développement de l'invention, les coques des actionneurs piézoélectriques et le support forment un ensemble monolithique.

Selon un développement de l'invention, la surface d'entraînement circulaire est ajourée et le stator possède une masse oscillante de forme circulaire en contact avec la surface d'entraînement circulaire pour causer la rotation du rotor.

Selon un mode de réalisation particulier, la surface d'entraînement circulaire est définie par une pluralité de secteurs fixés à un arbre du rotor par une pluralité de bras, le mécanisme comportant un système de précharge configuré pour appliquer une contrainte sur la pluralité de bras et moduler un rayon de la surface d'entraînement circulaire.

Selon un mode de réalisation particulier, le circuit de contrôle délivre, à l'excitateur, au moins un signal sinusoïdal ayant une fréquence comprise entre 1kHz et 100kHz générant une vibration sensiblement elliptique de l'oscillateur.

Selon un développement de l'invention, le circuit de contrôle délivre des signaux électriques alternatifs en dents de scie non symétriques aux actionneurs piézoélectriques.

Selon un mode de réalisation particulier, l'oscillateur est muni d'au moins un bras de contact mobile radialement entre une position active où le au moins un bras de contact applique une pression de contact avec la surface d'entraînement circulaire supérieure à un seuil assurant l'adhérence et une position inactive dans laquelle le au moins un bras de contact est dépourvu de contact avec la surface d'entraînement circulaire ou dans laquelle le bras de contact applique une pression de contact inférieure au seuil assurant l'adhérence avec la surface d'entraînement circulaire. L'oscillateur comporte un actionneur radial alimenté par le circuit de contrôle et configuré pour déplacer le au moins un bras de contact entre la position active et la position inactive.

Selon un mode de réalisation particulier, le bras de contact comporte une palette magnétique et l'actionneur radial possède une bobine alimentée par le circuit de contrôle et coopérant avec la palette magnétique pour déplacer la palette magnétique et causer le déplacement du bras de contact entre la position active et la position inactive.

Selon un autre mode de développement de l'invention, le bras de contact est monté mobile sur une liaison pivot montée fixement sur l'excitateur.

L'invention a également pour objet un procédé de fonctionnement d'un tel mécanisme de déplacement qui est facile à utiliser et procure une meilleure tenue mécanique que les dispositifs de l'art antérieur associé à une grande résolution de positionnement.

On tend à obtenir ces avantages au moyen d'un premier procédé d'utilisation d'un mécanisme de déplacement selon l'un des modes de réalisation précédents et qui comporte successivement les phases suivantes :
- déformer l'oscillateur à une première vitesse de déformation pour causer un déplacement en rotation du rotor, l'oscillateur se déformant depuis une position de référence et étant en contact mécanique adhérent avec la surface d'entrainement circulaire,
- déformer l'oscillateur à une deuxième vitesse de déformation supérieure à la première vitesse de déformation pour rapprocher l'oscillateur de la position de référence, la deuxième vitesse de rotation causant le glissement de l'oscillateur par rapport à la surface d'entrainement circulaire.

On tend à obtenir ces avantages au moyen d'un second procédé d'utilisation d'un mécanisme de déplacement selon l'un des modes de réalisation précédents et qui comporte successivement :
- placer le bras de contact dans la position active pour assurer le contact du bras de contact et l'adhérence avec la surface d'entraînement circulaire,
- déformer l'oscillateur depuis une position de référence pour obtenir une composante tangentielle à la surface cylindrique d'entraînement, la déformation de l'oscillateur causant une rotation du rotor,
- placer le bras de contact dans la position inactive pour supprimer le contact mécanique avec la surface d'entraînement circulaire, ou appliquer une pression de contact inférieure à un seuil d'adhérence entre le bras de contact et la surface d'entraînement circulaire,
- replacer l'oscillateur dans la position de référence.

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
- la figure 1 illustre, de manière schématique, en coupe, un premier mode de réalisation d'un mécanisme de déplacement en translation à vis;
- la figure 2 illustre, de manière schématique, en coupe, un deuxième mode de réalisation d'un mécanisme de déplacement en translation à vis;
- la figure 3 illustre, de manière schématique, en coupe, un troisième mode de réalisation plus détaillé d'un mécanisme de déplacement en translation à vis;
- la figure 4 illustre, de manière schématique, en perspective, un mécanisme de déplacement muni d'un pallier flexible;
- la figure 5 illustre, de manière schématique, en perspective, le troisième mode de réalisation d'un mécanisme de déplacement en translation à vis sans une partie du cadre;
- la figure 6 illustre, de manière schématique, en perspective, un stator muni d'une masse oscillante et d'un excitateur mobile en rotation;
- la figure 7 illustre, de manière schématique, en perspective, de manière plus détaillée l'excitateur mobile en rotation ;
- la figure 8 présente un chronogramme d'un signal de commande de l'oscillateur pour réaliser un déplacement du rotor de type pas à pas inertiel ;
- la figure 9 illustre, de manière schématique, en coupe, un quatrième mode de réalisation d'un actionneur à contact radial ;
- la figure 10 présente un chronogramme des signaux de commande du mécanisme illustré à la figure 9 pour réaliser un déplacement du rotor de type pas à pas quasi-statique.

### Description des modes de réalisation

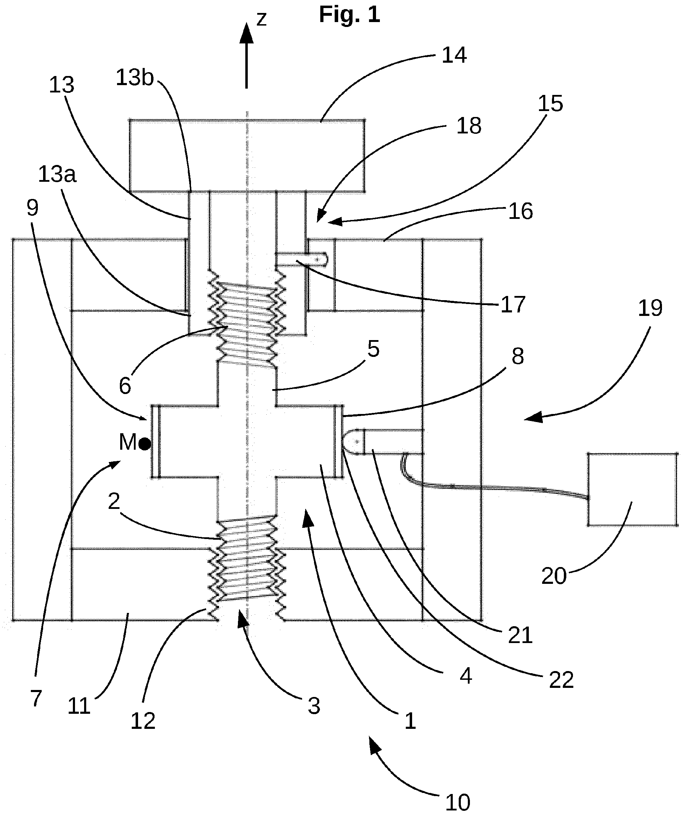

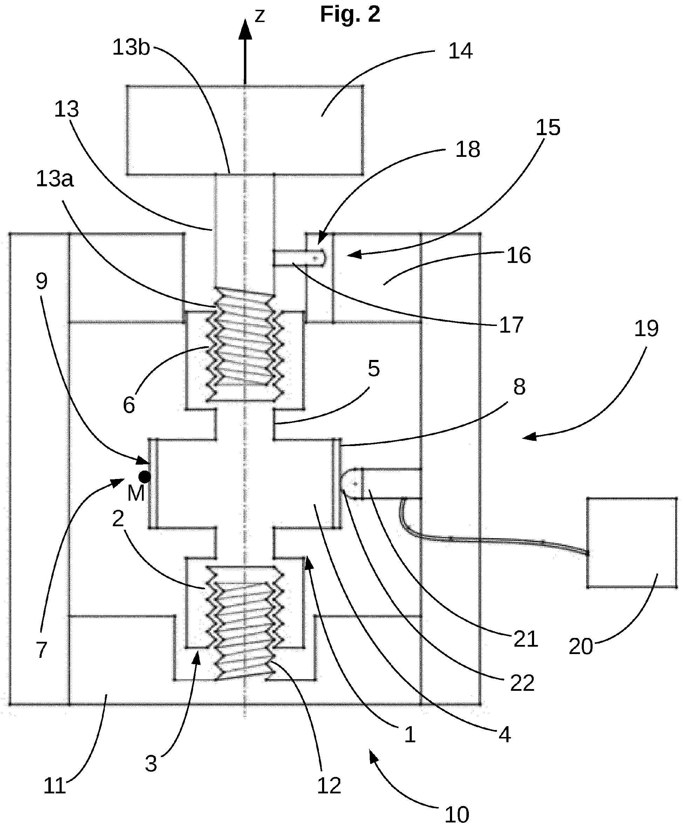

En référence aux figures 1 et 2, le mécanisme de déplacement en translation comporte un rotor 1 également appelé un sous-ensemble rotorique. Le rotor 1 possède une première extrémité 3 présentant une première partie filetée 2 comprenant un premier filet. Le premier filet possède un premier pas. Le rotor 1 possède une deuxième extrémité 5 présentant une deuxième partie filetée 6 comprenant un deuxième filet qui possède un deuxième pas identique ou différent au premier pas. La figure 1 illustre une première partie filetée 2 et une deuxième partie filetée 6 chacune sous la forme d'une tige munie d'un filetage externe. La figure 2 illustre une première partie filetée 2 et une deuxième partie filetée 6 chacune sous la forme d'une tige munie d'un filetage interne ou taraudage. Bien entendu, il est possible d'avoir un rotor 1 avec une extrémité filetée et une autre extrémité taraudée.

Entre les première et deuxième parties filetées 2 et 6 se situe une partie centrale 4 qui définie une zone active 7 du rotor 1. La zone active 7 possède une surface d'entrainement 9 avantageusement circulaire de rayon R dont l'axe de symétrie de révolution est un axe z qui est également l'axe de rotation des première et deuxième parties filetées 2, 6 et plus généralement du rotor 1. De manière avantageuse, la surface d'entrainement 9 possède une section circulaire perpendiculairement à l'axe z.

De manière avantageuse, la section d'entrainement circulaire 9 est recouverte par une couche de frottement 8. La couche de frottement 8 permet d'augmenter le coefficient de frottement entre la zone active et un stator qui vient en contact de la zone d'entrainement 9 pour déplacer le rotor 1 en rotation. Il est particulièrement avantageux de prévoir que la couche de frottement 8 possède une bonne résistance à l'usure. Il est avantageux de choisir un matériau formant la couche de frottement dont le coefficient d'adhérence est supérieur à 0,1 de préférence compris entre 0,2 et 0,5.

Le mécanisme de déplacement comporte un cadre 10 également appelé sous-ensemble base fixe. Le cadre 10 possède une première face avec une première paroi 11 qui définit une première partie filetée 12 ayant le premier pas et qui coopère avec la première partie filetée du rotor 1. La coopération entre la première partie filetée 12 du cadre 10 et la première partie filetée 2 du rotor 1 autorise la rotation du rotor 1 par rapport au cadre 10 ainsi que le déplacement en translation du rotor 1 selon l'axe z par rapport au cadre 10. En d'autres termes, la première extrémité 3 du rotor 1 et la paroi 11 du cadre 10 se présentent sous la forme d'une vis coopérant avec un écrou, pour réaliser une liaison visée entre la première extrémité 3 et la paroi 11. Comme illustré à la figure 1, la première partie filetée 12 du cadre 10 peut être un premier orifice taraudé. Comme illustré à la figure 2, la première partie filetée 12 du cadre 10 peut être une zone saillante filetée.

Le mécanisme de déplacement comporte un arbre de sortie 13 qui possède une première extrémité 13a et une deuxième extrémité 13b. La première extrémité 13a de l'arbre de sortie 13 est une extrémité filetée ou taraudée avec un filet ayant le deuxième pas pour coopérer avec la deuxième partie filetée 6 du rotor 1. La coopération entre la première extrémité 13a et la deuxième partie filetée 6 autorise la rotation du rotor 1 par rapport à l'arbre de sortie 13 ainsi que le déplacement en translation de l'arbre de sortie 13 selon l'axe z par rapport au rotor 1. Selon les modes de réalisation, l'arbre de sortie 13 peut être un tube ou une tige.

La figure 1 illustre schématiquement une première extrémité 13a sous la forme d'un orifice taraudé possédant une partie filetée ayant le deuxième pas. L'arbre de sortie 13 coopère avec le rotor 1 de sorte que la deuxième extrémité 5 du rotor 1 s'insère dans l'orifice taraudé de l'arbre de sortie 13. La figure 2 illustre schématiquement une première extrémité 13a sous la forme d'une zone saillante possédant une partie filetée ayant le deuxième pas. L'arbre de sortie 13 coopère avec le rotor 1 de sorte que la partie saillante filetée de l'arbre de sortie 13 s'insère dans la deuxième extrémité 5 taraudée du rotor 1.

La deuxième extrémité 13b de l'arbre de sortie 13 possède une interface de fixation permettant la fixation d'une charge 14 destinée à être déplacée et positionnée en translation suivant l'axe z. La charge 14 est avantageusement un miroir qui translate selon l'axe z ce qui permet de réaliser la refocalisation d'un système optique. Il est également possible de déplacer le miroir selon un autre mouvement pour réaliser du pointage. La charge 14 peut aussi être une zone déformable d'un objet tel qu'un miroir pour optique adaptative. Il est également possible de prévoir que la charge forme ou face partie d'une antenne conformable de télécommunication. La charge peut également former le pointeau d'une électrovanne.

Le cadre 10 possède un dispositif de blocage 15 configuré pour bloquer la rotation de l'arbre de sortie 13 autour de l'axe z par rapport au cadre 10.

Dans un mode de réalisation particulier, le cadre possède une deuxième face définie par une deuxième paroi 16 et traversée par l'arbre de sortie 13. La deuxième face est opposée à la première face. La deuxième paroi 16 définit avantageusement un deuxième orifice autorisant l'introduction de l'arbre de sortie 13 et la translation de l'arbre de sortie 13 selon l'axe z par rapport au cadre 10. Le cadre 10 et l'arbre de sortie 13 peuvent définir le dispositif de blocage 15.

Dans une configuration particulière, le blocage de la rotation de l'arbre de sortie 13 par rapport au rotor 1 est obtenu par une forme particulière de la paroi externe de l'arbre de sortie 13 qui coopère avec une forme particulière de l'orifice ménagé dans la paroi 16. Par exemple, la forme de la paroi externe de l'arbre de sortie 13 et la forme de l'orifice de la paroi 16 peuvent être complémentaires et non circulaires.

En alternative ou en complément, l'arbre de sortie 13 comporte un pion 17 qui coopère avec une rainure 18 orientée selon l'axe z dans la paroi 16 pour empêcher la rotation de l'arbre de sortie 13 autour de l'axe z. Il est possible que le pion 17 et la rainure 18 autorisent un léger jeu en rotation.

Comme l'arbre de sortie 13 est bloqué en rotation, il est possible d'installer fixement la charge 14 sur l'arbre de sortie 13 et ainsi résoudre les inconvénients soulevés pour les documents JPH08251950 et US2012314269.

Le mécanisme de déplacement comporte un stator 19 dont la zone de contact 22 est configurée pour se déplacer par rapport à une position de référence, avantageusement par déformation. La zone de contact 22 du stator est en contact avec la zone d'entrainement 9 du rotor et se déplace depuis sa position de référence. Lors de ce déplacement, elle déplace la zone d'entrainement 9 ce qui engendre la rotation du rotor 1. Par la bais de la zone de contact 22, Le stator 19 applique une force sur le rotor 1. Plus particulièrement, le stator 19 se déforme et la déformation applique une force tangentielle sur la zone d'entrainement 9. Le stator 19 est un excitateur électromécanique ou vibrateur.

En d'autres termes, la zone de contact 22 du stator 19 est en contact de la surface d'entrainement 9 de sorte que les mouvements appliqués par la zone de contact 22 sur la surface d'entrainement 9 causent la rotation du rotor 1.

Le stator 19 comporte un circuit de contrôle 20 qui excite un oscillateur 21 mécanique. L'oscillateur 21 est fixé au cadre 10 et il se déforme autour d'une position de repos ou d'une position de référence. La position de repos de l'oscillateur 21 est obtenue en l'absence d'alimentation. La position de référence peut être représentative d'une alimentation de référence ou la position de repos. L'oscillateur 21 anime la zone de contact 22 qui est en contact avec la zone d'entrainement 9 pour entrainer le rotor 1 en rotation.

Le circuit de contrôle 20 génère des signaux vers l'oscillateur 21 de manière à ce que l'oscillateur 21 produise des micro-mouvements destinés à produire la rotation du rotor 1 autour de l'axe z. Le circuit de contrôle 20 peut être connecté à l'oscillateur 21 par tout moyen adapté, par exemple par un câble. Les micro-mouvements sont des micro-translations linéaires qui sont transmis au rotor tangentiellement pour le faire tourner. L'oscillateur 21 possède une zone de contact 22 qui vient en contact de la zone d'entrainement cylindrique 9 du rotor 1. Dans un mode de réalisation particulier, le circuit de contrôle 20 est configuré pour appliquer des signaux oscillants qui font osciller l'oscillateur 21 autour de sa position de référence.

De manière avantageuse, un mouvement de micro-translation de la zone de contact 22 de l'oscillateur 21 assure l'entraînement par frottement de la surface d'entrainement 9, mettant en micro-rotation le rotor 1. Cette micro-rotation du rotor 1 produit un micro-mouvement en translation suivant l'axe z de l'arbre de sortie 13. Lorsque ces micro-mouvements sont répétés, une translation longue de l'arbre de sortie 13 est obtenue, assurant la mise en position de la charge 14 en translation suivant l'axe z.

Dans un mode de réalisation particulier, l'oscillateur 21 applique un contact permanent sur la zone d'entrainement 9. Les micro-mouvements produits par le stator permettent de déplacer le rotor 1 selon un mode de déplacement dit par glissement-adhérence.

Dans la phase d'adhérence, obtenue par un mouvement lent du stator, l'oscillateur 21 est en contact avec le rotor de sorte que le déplacement de l'oscillateur 21 cause la rotation du rotor 1, l'adhérence est maintenue entre le stator et le rotor. Dans la phase de glissement, obtenue par un mouvement rapide du stator, l'oscillateur 21 reste en contact avec le rotor 1 mais glisse sur la zone de d'entrainement 9. Avantageusement, le circuit de contrôle 20 applique une excitation transitoire sur le rotor 1 au moyen de l'oscillateur 21 de manière à générer successivement des signaux électrique causant les phases de glissement et le rotor 1. On réalise la déformation du stator avec une première vitesse de déformation qui maintient l'adhérence avec le rotor. Après la rotation du rotor selon un premier sens, une étape de glissement du stator par rapport au rotor est réalisée par la déformation du stator selon le deuxième sens et avec une vitesse de déformation plus importante. La déformation lente du stator peut être effectuée de manière à générer ou non un mouvement du rotor par inertie une fois la déformation du stator arrêtée.

Dans un autre mode de réalisation particulier, pour assurer un mouvement par glissement-adhérence, le circuit de contrôle 20 excite l'oscillateur 21 au moyen d'au moins un signal sinusoïdal dont la fréquence est supérieure à 1kHz et inférieure à 100kHz, préférentiellement supérieure à 20kHz pour être ultrasonique. Le circuit de contrôle 20 applique au moins une excitation harmonique sur le rotor 1 au moyen de l'oscillateur 21 de manière à générer une vibration sensiblement elliptique à la résonance de l'oscillateur 21. Les deux modes de réalisation peuvent être appliqués successivement par le même circuit de contrôle.

Dans un autre mode de réalisation particulier, les micro-mouvements permettent de déplacer le rotor 1 selon un mode de déplacement dit par décollement-adhérence. Durant les micro-mouvements, l'oscillateur 21 perd le contact avec le rotor 1 lors de phases de décollement puis retourne en contact avec le rotor 1 lors des phases d'adhérence. Les phases d'adhérence peuvent intervenir dans le maintien de la position du rotor 1.

Suivant ce mode de réalisation particulier, pour assurer un déplacement par décollement-adhérence, le circuit de contrôle 20 et l'oscillateur 21 forment un stator de moteur pas à pas quasi-statique. Le circuit de contrôle 20 applique une excitation quasi-statique sur le rotor 1 au moyen de l'oscillateur 21 de manière à générer des mouvements quasi-statiques sur le rotor 1. Lors du contact entre l'oscillateur 21 et le rotor 1, il y a adhérence pour obtenir la rotation du rotor.

La rotation du rotor 1 fixé au cadre 10 par la liaison filetée hélicoïdale formée par la première partie filetée 2 du rotor 1 et la première partie filetée 12 du cadre 10 se traduit par un déplacement du rotor en translation selon l'axe z. Le sens de rotation du rotor 1 définit la direction de déplacement du rotor 1 selon l'axe z pour approcher ou écarter la partie centrale 4 du rotor de la paroi 11. Un tour complet du rotor 1 produit une translation selon l'axe z d'une valeur égale au premier pas du rotor 1. Lors de la rotation du rotor 1, le système de blocage 16 empêche la rotation de l'arbre de sortie 13 autour de l'axe z. L'arbre de sortie 13 se déplace en translation et non en rotation.

La deuxième partie filetée 6 du rotor 1 assure le guidage de l'arbre de sortie 13 suivant une liaison hélicoïdale selon le deuxième pas relativement au rotor 1. Lorsque le rotor 1 effectue un tour complet, l'arbre de sortie 13 se déplace en translation par rapport au rotor 1 d'une distance égale au deuxième pas.

En conséquence, le déplacement de l'arbre de sortie 13 par rapport au cadre 10 lors d'une rotation du rotor 1 correspond à la somme de la translation du rotor 1 par rapport au cadre 10 et de la translation de l'arbre de sortie 13 par rapport au rotor 1.

Dans une forme particulière de réalisation illustrée à la figure 1, les filets des parties filetées 2 et 6 sont orientés pour assurer un montage différentiel. Un tour complet du rotor 1 se traduit par une translation de l'arbre de sortie 13 d'une valeur égale à la différence des pas de vis des première et deuxième partie filetées 2 et 6 qui ont des pas différents. Le montage différentiel permet d'obtenir une réduction d'un facteur prédéterminé de la course de l'arbre de sortie 13 vis-à-vis de la course du rotor 1. Le rotor 1 translate dans un sens par rapport au cadre 10 et l'arbre de sortie 13 translate dans l'autre sens par rapport au rotor 1.

Dans une autre forme particulière de réalisation illustrée à la figure 2, les filets des parties filetées 2 et 6 sont en montage additif. Un tour complet du rotor 1 se traduit par une translation de l'arbre de sortie 13 d'une valeur égale à la somme des pas de vis des première et deuxième partie filetées 2 et 6. Le rotor 1 translate dans un sens par rapport au cadre 10 et l'arbre de sortie 13 translate dans le même sens par rapport au rotor 1.

Dans les deux cas de figure, la chaîne d'effort entre la charge 14 (ou l'arbre de sortie 13) et le cadre 10 ne passe que par le rotor 1 et les liaisons vissées des deux filets sans passer par le dispositif d'excitation 19 ou des roulements additionnels. Cette configuration permet de former un mécanisme de déplacement assurant une meilleure tenue aux efforts externes, aux vibrations et aux chocs. A cause des frottements existants dans les liaisons vissées des filets 2 et 6, le rotor 1, l'arbre de sortie 13 et la charge 14 sont naturellement bloqués en position hors alimentation, quelle que soit leur position intermédiaire.

A cause de la cinématique du mécanisme de déplacement qui combine rotation et translation, un point M situé sur la surface d'entrainement 9 décrit une trajectoire hélicoïdale de rayon R autour de l'axe z. Pour cette raison, la zone de contact 22 entre en contact avec différents points de la génératrice de la surface d'entrainement 9. Ainsi l'usure de la couche externe de la surface d'entrainement 9 est uniformément répartie, assurant une durée de vie accrue au mécanisme de déplacement.

Suivant le mode de conception du stator 19, l'amplitude des micro-mouvements linéaires de la zone de contact 22 du stator peut se situer entre 1 et 100*µ*m, typiquement 10*µ*m. Ainsi, pour un rayon R de la surface d'entrainement 9 égal à 16mm et des amplitudes de micro-mouvements égales à 10*µ*m, la rotation complète du rotor 1 est effectuée avec environ 10 000 oscillations. Suivant la figure 1, avec la configuration différentielle du rotor 1 possédant un premier pas P2=1mm et un deuxième pas P6=1.1mm, la translation par tour de vis est de T=P6-P2=0.1 mm. Compte tenu du nombre d'oscillations requis par tour, la résolution linéaire du mécanisme est donc de 10nm.

Le circuit de contrôle 20 peut fonctionner soit en boucle ouverte, soit en boucle fermée à l'aide d'au moins un capteur de position mesurant avec précision la position de l'arbre de sortie 13 ou de la charge 14. La mise en œuvre d'un asservissement en boucle fermée et d'un capteur de position permet d'exploiter la résolution nanométrique du mécanisme pour obtenir le contrôle en précision nanométrique. Cette précision nanométrique complète le blocage en position du mécanisme hors alimentation et l'excellente tenue aux efforts externes, aux vibrations et aux chocs, ce qui permet d'offrir une solution pertinente de positionnement de haute précision pour systèmes embarqués. Le circuit de contrôle 20 reçoit une information du capteur de position non illustré. L'information du capteur de position est représentative de la position de l'arbre de sortie 13 par rapport au cadre 10. Le circuit de contrôle 20 émet des signaux électriques à l'oscillateur 21 jusqu'à ce que le capteur de position transmette un signal représentatif de la position recherchée.

Suivant la figure 2, avec la configuration additive du rotor 1 possédant des pas P2=1mm et P6=1 mm, la translation par tour de vis est de T=P6+P2=2mm. Compte tenu du nombre d'oscillations requis par tour, la résolution linéaire du mécanisme est donc de 200nm. Cette configuration est moins résolue que la configuration différentielle, mais elle est pertinente dans certaines applications de micro-positionnement embarqué. La solution offre en contrepartie une vitesse de déplacement beaucoup plus grande et conserve l'avantage du maintien en position du mécanisme hors alimentation et une excellente tenue aux efforts externes, aux vibrations et aux chocs.

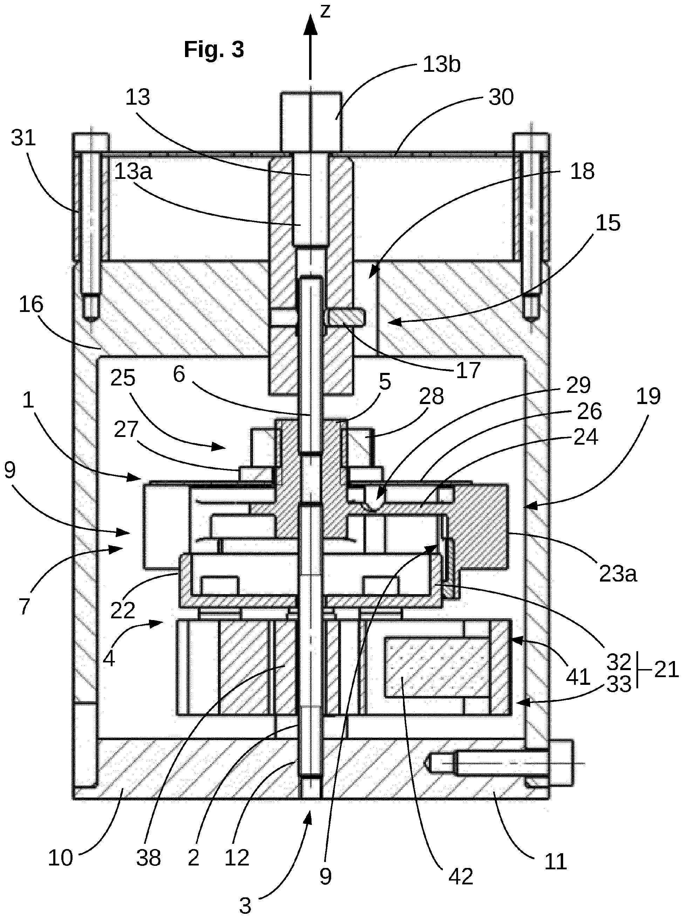

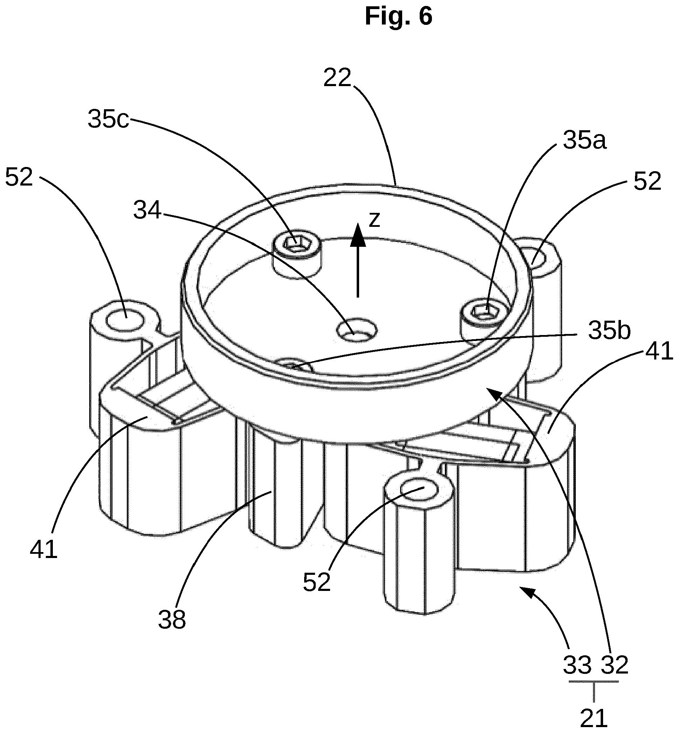

Les figures 3, 5, 6 et 7 présentent une forme de réalisation différente et plus détaillée du mécanisme de déplacement en translation présenté en figures 1 et 2. Comme pour les modes de réalisations précédents, on retrouve un rotor 1, un cadre 10, un circuit d'excitation électromécanique 19 configuré pour exciter et faire tourner le rotor 1 ainsi que les première et deuxième parties filetées qui coopèrent pour faire translater l'arbre de sortie 13.

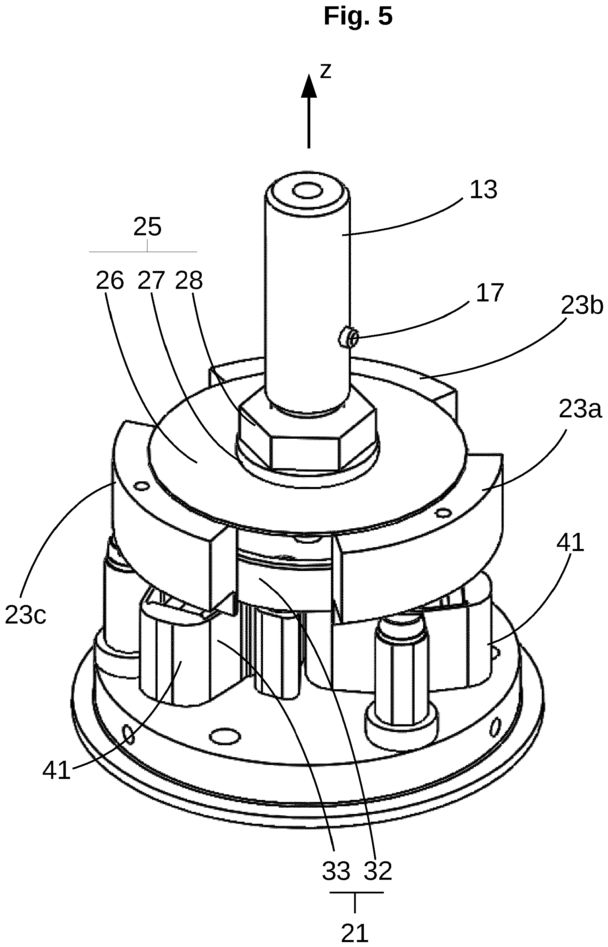

Alors que le mode de réalisation illustré aux figures 1 et 2 utilise une zone active 7 ayant une surface de contact circulaire 9 continue, le mode de réalisation illustré aux figures 3 et 5 représente une configuration ayant une surface de contact 9 ajourée. La zone active 7 du rotor 1 est formée par plusieurs secteurs espacés les uns des autres. L'oscillateur 21 vient en contact des différents secteurs pour induire les micro-rotations.

Dans le mode de réalisation illustré aux figures 3 et 5, le rotor 1 est muni d'une zone centrale creuse 4 de manière à définir par exemple une cloche ou une coupelle. Il est alors avantageux d'utiliser la surface interne du rotor 1 en tant que surface d'entrainement 9. Il est toujours préférable d'avoir une surface d'entrainement circulaire ou sensiblement circulaire pour mieux maitriser la rotation du rotor 1. Dans un tel cas de figure, l'oscillateur 21 se trouve à l'intérieur de la cloche/coupelle de manière à venir en contact de la surface interne de la surface d'entrainement 9.

Comme indiqué plus haut, la rotation du rotor 1 intervient lorsque l'oscillateur 21 est en contact de la surface d'entrainement 9 et se déplace tangentiellement. Il est donc particulièrement avantageux de maitriser le contact entre l'oscillateur 21 et la surface d'entrainement pour assurer une transmission d'effort efficace.

Dans le mode de réalisation illustré aux figures 3 et 5, le rotor 1 comporte une pluralité de secteurs 23, ici trois secteurs 23a, 23b, 23c qui sont fixés à un arbre central du rotor 1. La surface d'entrainement 9 est ajourée et définit une surface cylindrique de section circulaire ou assimilée à une section circulaire. En rotation, la surface d'entrainement 9 définit un cercle dont le centre se situe sur l'axe z.

Les secteurs 23a, 23b, 23c sont reliés à l'arbre central par des bras 24a, 24b, 24c. Il est avantageux de prévoir que le rotor 1 comporte un système de précharge 25 destiné à appliquer une contrainte sur les bras 24a, 24b, 24c pour les déformer. Les secteurs sont espacés les uns des autres.

La déformation des bras 24a, 24b, 24c déplace les secteurs 23a, 23b, 23c afin de rapprocher la zone d'entrainement 9 vers l'oscillateur 21 pour assurer un contact de bonne qualité. Dans le mode de réalisation illustré aux figures 3 et 5, le système de précharge 25 est configuré pour rapprocher la surface d'entrainement 9 interne vers l'oscillateur 21 et ainsi réduire le rayon R. Dans une alternative de réalisation où le stator agit sur la surface extérieure d'un rotor cylindrique comme en figure 1, le système de précharge 25 est configuré pour rapprocher la surface d'entrainement 9 externe vers l'oscillateur 21 et ainsi augmenter le rayon R.

Le système de précharge peut être formé d'un disque 26, une rondelle 27 et un écrou 28 agencé pour déformer les secteurs 23a, 23b, 23c en déformant les bras 24a, 24b, 24c et créer des déplacements radiaux des secteurs 23a, 23b, 23c. Le système de précharge 25 est destiné à maintenir la mise en contact de la surface de surface d'entrainement 9 segmentée du rotor 1 avec l'oscillateur 21. Le système de précharge 25 permet d'appliquer une force de précharge élastique ce qui assure une fonction de rattrapage de jeu d'usure de la surface d'entrainement 9 ou de la surface de contact 22 avec le temps.

Il est avantageux de réaliser des amincissements 29a, 29b, 29c sur les bras 24a, 24b, 24c pour faciliter l'obtention des déplacements radiaux avec le système de précharge 25.

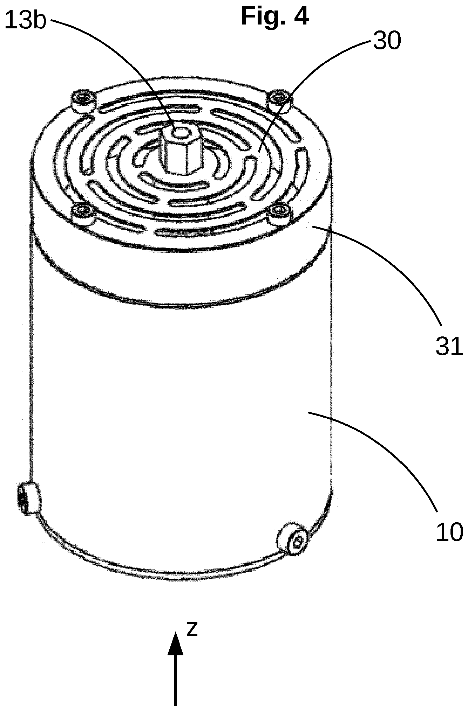

Dans le mode de réalisation illustré, le cadre 10 est formé par plusieurs éléments dont un premier élément formant la première paroi 11. Le premier élément est fixé à un deuxième élément qui définit la deuxième paroi 16. Dans le mode de réalisation illustré aux figures 3 et 4, l'arbre de sortie 13 définit une interface de fixation permettant la fixation de la charge destinée à être entrainée et déplacée en translation suivant l'axe z.

Dans un mode particulier de réalisation illustré aux figures 3 et 4, le dispositif de blocage 15 utilise un palier flexible 30 fixé d'une part à l'arbre de sortie 13 et d'autre part au cadre 10, de préférence via une ou plusieurs entretoises 31. Le palier flexible 30 est conçu de manière à être flexible dans la direction de translation z et raide dans les autres directions. Il vise notamment à bloquer la rotation de l'arbre de sortie 13 autour de l'axe z mais aussi à supprimer les différentes rotations parasites.

Le palier flexible 30 se présente avantageusement sous la forme d'au moins une membrane ajourée, par exemple une membrane formée de plusieurs lames minces agencées en nid d'abeille, en spirales, en croix ou en cercles concentriques. Le palier flexible 30 est formé par une pluralité de lames, dont l'axe perpendiculaire aux différentes faces est parallèle à l'axe z. Le palier flexible 30 permet de bloquer la rotation autour de l'axe z tout en autorisant la translation suivant l'axe z de l'arbre de sortie 13 avec une force résistante inférieure à la force en translation du rotor 1 selon l'axe z. Cette force résistante peut être ajustée par exemple en modifiant la longueur des entretoises 31. Cette force résistante permet d'éviter les jeux internes se produisant au niveau des première et deuxième parties filetées 2 et 6 lors du changement de sens de rotation du rotor 1.

Le palier flexible 30 peut être utilisé en complément ou en alternative des moyens de blocage illustrés plus haut, par exemple en alternative ou en complément du pion 17 qui circule dans la rainure 18.

Suivant une forme particulière de réalisation, l'oscillateur 21 possède une section de contact circulaire qui coopère avec la surface d'entrainement 9. L'oscillateur 21 se présente préférentiellement sous la forme d'une cloche ou coupelle monolithique se plaçant à l'intérieur du rotor 1 et présentant une zone de contact 22 de section circulaire en vis-à-vis de la surface d'entrainement 9 du rotor 1. Cette forme de réalisation de l'oscillateur 21 facilite un mode de fonctionnement inertiel conduisant à un entraînement du rotor 1 en glissement-adhérence. Dans le mode de réalisation illustré à la figure 3, l'oscillateur 21 est sous la forme d'une coupelle se logeant à l'intérieur de la cloche définie par la zone active 7 du rotor 1. En alternative, la zone active 7 du rotor 1 est sous la forme d'une coupelle se logeant à l'intérieur de la cloche définie par l'oscillateur 21. Dans ces deux cas de figure, il est possible de prévoir que l'oscillateur 21 ou la zone active 7 (se trouvant à l'intérieur de la coupelle) soit sous la forme d'un disque.

L'oscillateur 21 est avantageusement maintenu en contact pressant contre la surface d'entrainement 9, via le système de précharge 25, afin de faciliter un entraînement en glissement-adhérence du rotor 1 par l'oscillateur 21.

Dans le mode de réalisation particulier illustré aux figures 3, 5 et 6, l'oscillateur 21 possède une masse oscillante 32 associée à un excitateur 33. La masse oscillante 32 est illustrée ici sous la forme d'un disque et avantageusement sous la forme d'une coupelle. La masse oscillante 32 définit un trou 34 permettant le passage de la première extrémité 3 du rotor 1. La masse oscillante 32 peut également être appelée anneau statorique. L'excitateur 33 est un dispositif qui se déforme de manière à déplacer la masse oscillante 32 par rapport à une position de référence. L'excitateur 33 est excité selon des modes de déformation qui permettent de créer des efforts tangentiels à la zone de contact entre la masse oscillante 32 et la surface d'entrainement 9. L'excitateur 33 est avantageusement un excitateur piézoélectrique.

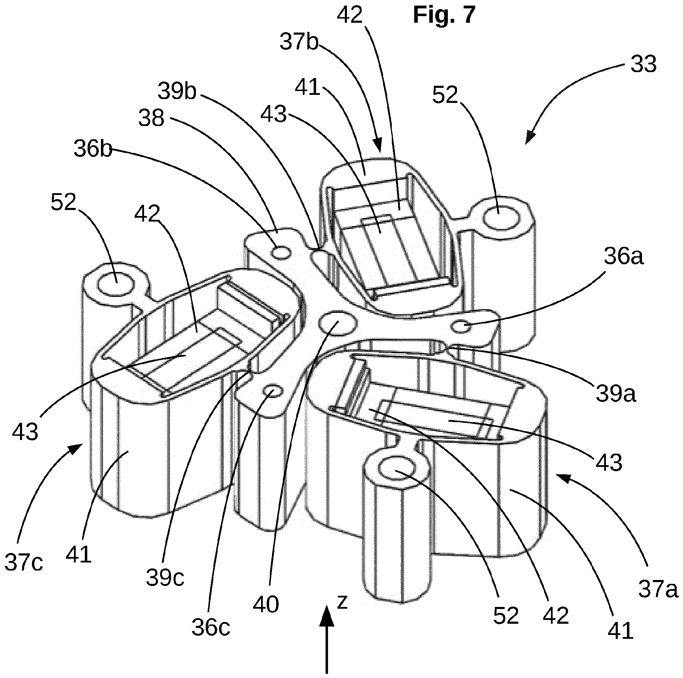

L'excitateur 33 est avantageusement un actionneur angulaire. La masse oscillante 32 est fixée à l'excitateur par trois vis 35a, 35b, 35c qui passent au travers de la masse oscillante 32 et qui se fixent à des interfaces filetées 36a, 36b, 36c de l'excitateur 33, par exemple aux trois interfaces filetées 36a, 36b, 36c de l'actionneur angulaire illustré à la figure 7. Par actionneur angulaire 33, on entend un dispositif d'excitation configuré pour générer des déplacements de l'actionneur par rotation en débattements angulaires, dans l'exemple illustré par rotation autour de l'axe z. Les déplacements générés tangentiellement à la zone de contact 22 sont micrométriques. Avantageusement, les déplacements sont dans la gamme 1-1000 microns.

Dans une forme particulière de réalisation, l'actionneur angulaire 33 est composé de trois actionneurs piézoélectriques 37a, 37b, 37c, par exemple trois actionneurs piézoélectriques amplifiés. Les trois actionneurs piézoélectriques 37a, 37b, 37c sont reliés à un support 38 comportant trois branches. De manière avantageuse, les trois branches sont uniformément espacées angulairement dans un plan perpendiculaire à l'axe z. Préférentiellement, l'actionneur angulaire 33 présente une symétrie de rotation autour de l'axe z, l'angle de rotation étant égal à 360°/n où n est le nombre de branches et/ou d'actionneurs piézoélectriques. La déformation des actionneurs piézoélectriques permet de faire tourner le support 38 autour de l'axe z. De manière avantageuse, les actionneurs piézoélectriques possèdent une extrémité 52 destinées à être fixée directement ou indirectement au cadre 10 et déplacent le support 38 selon leurs déformations.

Chaque actionneur piézoélectrique est relié à une branche du support 38 via une des articulations flexibles 39a, 39b, 39c. Les articulations flexibles 39a, 39b, 39c relient une face latérale du support 38 avec un actionneur piézoélectrique 37a, 37b, 37c. Deux actionneurs piézoélectriques adjacents sont séparés par une branche et deux branches adjacentes sont séparées par un actionneur piézoélectrique.

Avantageusement, les actionneurs piézoélectriques 37a, 37b, 37c, les branches et le support 38 forment un élément monolithique dans un seul et même matériau. Le support 38 sous la forme d'une étoile qui possède un trou 40 permettant le passage de la première extrémité 3 du rotor 1. Chaque actionneur piézoélectrique 37a, 37b, 37c comporte une coque 41 de préférence en métal et qui peut avoir la forme d'une ellipse ou d'un losange. Chaque actionneur piézoélectrique 37a, 37b, 37c comporte un empilement piézoélectrique 42 par exemple une céramique piézoélectrique multicouche. La coque 41 définit un logement pour installer l'empilement piézoélectrique. Les dimensions du logement sont ajustées aux dimensions de l'empilement piézoélectrique de sorte qu'un allongement de l'empilement piézoélectrique se traduise par une contraction de la coque 41. Avantageusement, les actionneurs piézoélectriques possèdent chacun une coque définissant un logement pour un empilement piézoélectrique. La coque et l'empilement piézoélectrique sont configurés de sorte qu'une déformation d'une première valeur de l'empilement piézoélectrique selon une première direction cause une déformation d'une deuxième valeur supérieure à la première valeur selon une seconde direction. La coque est connectée au support selon la seconde direction. Le support 38 se déplace selon la seconde direction.

De manière avantageuse, les actionneurs piézoélectriques 37a, 37b, 37c sont disposés dans un même plan perpendiculaire à l'axe z. Il en avantageusement de même pour les empilements piézoélectriques 42.

Chaque empilement piézoélectrique 42 possède des électrodes 43 reliées électriquement au circuit de contrôle 20 par un câble. Lorsque les dispositifs piézoélectriques 42 sont alimentés, ils se déforment sensiblement proportionnellement à la tension de commande appliquée et ils produisent un micro déplacement suivant leur grand axe. Par exemple, un empilement piézoélectrique de 10mm de long produit une course variant de 0 à 10*µ*m pour une tension variant de 0 à 150V. La micro-déformation de l'empilement piézoélectrique 42 est amplifiée par la coque 41 produisant un micro-mouvement linéaire amplifié et orienté suivant le petit axe de la coque 41. Avec une valeur d'amplification qui peut être égale à 5, les amplitudes obtenues varient ainsi de 0 à 50*µ*m pour une tension variant de 0 à 150V. Chacun de ces micro-mouvements linéaires amplifiés est transmis via les articulations flexibles 39 au support 38 en étoile. Un actionneur piézoélectrique amplifié est commercialisé par la demanderesse sous la dénomination APA®. Un actionneur piézoélectrique amplifié est décrit dans le document FR2740276.

Les actionneurs piézoélectriques 37 de l'actionneur angulaire 33 sont agencés de manière à ce que l'ensemble de leurs micro-déplacements génère un micro-mouvement angulaire du support 38 et donc de l'oscillateur 21. L'amplitude de ces micro-mouvements tangentiels peut varier entre 0 et 50*µ*m selon la valeur du signal électrique appliqué.

Pour réaliser un déplacement du rotor 1 par glissement-adhérence, le circuit de contrôle 20 applique un premier signal qui produit une déformation lente de l'oscillateur 21. Durant cette déformation lente, le rotor 1 effectue une micro rotation. Dans un mode de réalisation envisagé, l'oscillateur 21 est en contact continu avec le rotor 1. Pour éviter le retour du rotor 1 dans sa position initiale lorsque l'oscillateur 21 revient dans sa position de référence, l'oscillateur 21 revient avec une vitesse de déformation plus importante, de manière à obtenir le glissement du rotor 1 par rapport à l'oscillateur 21, en exploitant l'inertie du rotor 1. Celle-ci est responsable de son glissement et évite un mouvement du rotor dans le sens opposé. La répétition de ces mouvements permet d'obtenir de grandes courses de déplacement du rotor 1.

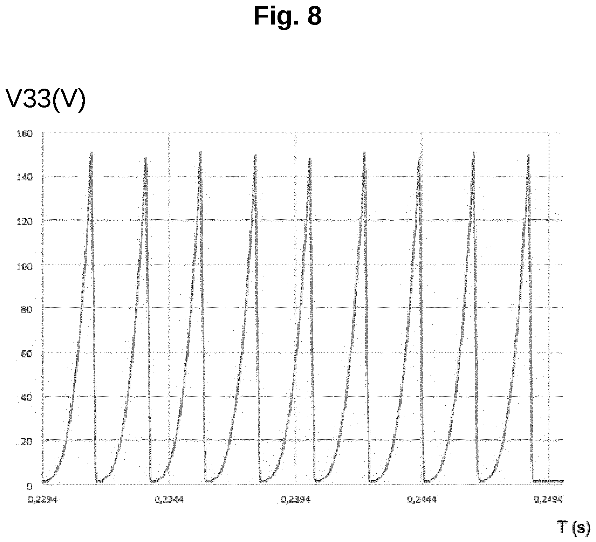

Il est possible d'obtenir un tel mouvement du rotor 1 en appliquant des signaux d'excitation électriques en forme de dents de scie asymétriques tels que ceux présentés par exemple à la figure 8 à l'aide du circuit de contrôle 20. L'oscillateur 21 produit des micro-débattements angulaires oscillants dans la direction tangentielle au rotor se présentant comme une succession de déformations lentes et de retours rapides à la position de référence. Les signaux d'excitation électriques sont avantageusement périodiques. La figure 8 illustre un signal périodique V33 délivré par le circuit de contrôle 20 pour déformer l'excitateur 33.

A titre d'exemple, les signaux d'excitation sont préférentiellement des signaux non symétriques avec une forme de pente montante différente de la forme de pente descendante. Par forme de pente montante différente de la forme de pente descendante, on entend que la durée pour atteindre la valeur maximale du signal est différente de la durée pour atteindre la valeur minimale de signal lors d'un pic de tension. En alternative, la forme du signal lors du front montant est différente de la forme du signal lors de front descendant. Avantageusement, le rapport de durée est supérieur à 5, de préférence supérieur à 10. Dans l'exemple de la figure 8, la durée du front montant est nettement plus importante que la durée du front descendant. L'inverse peut également être vrai. De nombreuses autres formes de signaux sont possibles avec des mélanges de signaux sinusoïdaux ayant des fréquences différentes.

Un micro-mouvement angulaire du rotor 1 de sens inverse peut être obtenu en inversant les signaux de commande de la figure 8, c'est-à-dire en ayant une déformation rapide depuis la position de référence puis un retour lent à la position de référence.

A chaque oscillation de l'oscillateur 21, l'oscillateur 21 engendre une micro-rotation du rotor 1. Cette micro-rotation du rotor 1 produit un micro-mouvement en translation suivant z de l'arbre de sortie 13. Lorsque ces micro-mouvements sont répétés, une translation longue de l'arbre de sortie 13 est obtenue permettant d'entraîner en translation suivant z la charge 14.

Il est possible de réaliser un dispositif de déplacement dans lequel l'amplitude des micro-mouvements tangentiels du rotor 1 peut varier entre 0 et 50*µ*m selon la tension maximale appliquée par le circuit de contrôle 20 par exemple sur les dispositifs piézoélectriques. Ainsi, pour une surface d'entrainement 9 de rayon R de 16mm avec des amplitudes par exemple de 50*µ*m, la rotation complète du rotor 1 est effectuée avec environ 2 000 oscillations.

Avec une configuration de rotor 1 possédant des premier et deuxième pas égaux à 1mm et 1.1mm, en configuration différentielle, la translation par tour de rotor 1 est de T=0.1mm. Le montage différentiel permet d'obtenir une réduction d'un facteur 10 de la course de l'arbre de sortie 13 vis-à-vis de la course du rotor 1. Compte tenu du nombre d'oscillations requis par tour, la résolution linéaire du mécanisme à la tension maximale (par exemple 150V) est de 50nm. Suivant le même principe, en réduisant la tension de commande par exemple de 150V à 15V, la résolution linéaire du mécanisme est de 5nm.

Avec des longueurs de première et deuxième parties filetées supérieures à 20mm pour chacune des parties filetées, il est possible d'obtenir une course du rotor 1 d'au moins 20mm. Compte tenu de la réduction d'un facteur 10 de la course de l'arbre de sortie 13 vis-à-vis de la course du rotor 1, la course de l'arbre de sortie 13 peut atteindre 2mm.

En complément ou en alternative du mode de réalisation décrit ci-dessus, le stator 19 est avantageusement configuré pour définir un mode fin de positionnement du mécanisme. Pour obtenir un mode fin de positionnement, il est avantageux d'appliquer des signaux électriques dans lequel on fait varier lentement la tension appliquée sur les actionneurs piézoélectriques 37. De cette manière, il est possible d'exploiter l'adhérence du rotor avec l'oscillateur 21. Le micro-déplacement des actionneurs piézoélectriques 37 se transmet continûment de l'oscillateur 21 au rotor 1. La rotation du rotor 1 se traduit par une translation du rotor 1 et par une translation de l'arbre de sortie 13. Dans ce mode de réalisation, la course de translation de l'arbre de sortie 13 est proportionnelle à la tension de commande des actionneurs piézoélectriques 37. En faisant varier la tension de 0 à 3V, la course de translation de l'arbre de sortie 13 peut être égale à 1nm. La résolution linéaire du mécanisme de déplacement peut être de l'ordre de 1nm. Relativement à la grande course de 2mm, la résolution relative est inférieure à 1 pour 1 000 000, soit 20 bits. Le retour à la position de référence s'effectue par une déformation rapide de l'oscillateur 21.

Comme précédemment, le circuit de contrôle 20 peut fonctionner soit en boucle ouverte, soit en boucle fermée à l'aide d'au moins un capteur de position mesurant la position de l'arbre de sortie 13. La mise en œuvre d'une boucle fermée et d'un capteur de position est avantageuse pour exploiter la résolution nanométrique du mécanisme de déplacement à des fins de nano positionnement.

Le mécanisme de déplacement autorise un blocage en position hors alimentation, une très bonne tenue aux efforts externes, aux vibrations et aux chocs, et une précision nanométrique ce qui permet d'offrir une solution pertinente de positionnement de haute précision pour systèmes embarqués.

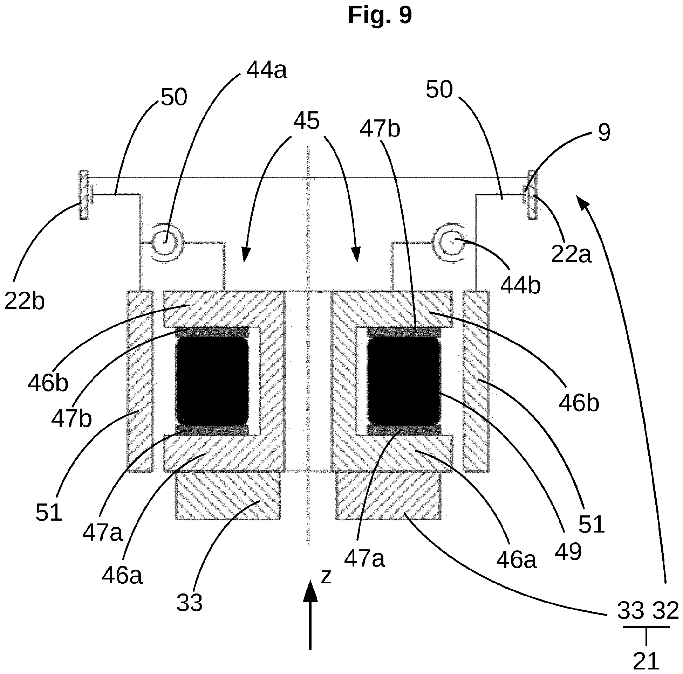

La figure 9 illustre un autre mode de réalisation d'un stator 19. Le stator 19 comporte un oscillateur 21 et un circuit de contrôle 20. La surface d'entrainement 9 est avantageusement définie par la surface interne d'une cloche ou d'une coupelle.

Le circuit de contrôle 20 est configuré pour appliquer les signaux électriques assurant un entraînement pas à pas quasi-statique, avantageusement pour obtenir un déplacement du rotor de type décollement-adhérence.

L'oscillateur 21 se déplace au moyen d'un excitateur 33, par exemple l'actionneur angulaire représenté à la figure 5.

L'oscillateur 21 possède plusieurs zones de contact 22a, 22b qui sont montées mobiles par rapport à l'excitateur 33 de sorte les zones de contacts puissent définir un mouvement supplémentaire par rapport aux déformations de l'excitateur 33.

Pour un oscillateur 21 à section circulaire, les zones de contact 22a, 22b se déplacent chacune radialement pour réaliser ou empêcher un contact entre l'oscillateur 21 et la zone d'entrainement 9. De manière avantageuse, au moins deux zones de contact 22a, 22b sont utilisées. Si deux zones de contact sont utilisées, elles sont placées selon un diamètre. Les zones de contact sont espacées les unes de autres et peuvent être actionnées simultanément ou indépendamment.

Les zones de contact 22a et 22b sont agencées pour suivre les déformations de l'excitateur 33. Les zones de contact 22a et 22b sont montées sur des bras de contact mobiles 50 de manière à former les zones de contact mobiles.

Les bras de contact 50 possèdent une position active et une position inactive. Dans la position active, un contact est réalisé entre la zone de contact 22a/22b et la surface d'entrainement 9. Dans la position inactive, aucun contact n'existe entre la zone de contact 22a/22b et la surface d'entrainement 9. En alternative, la pression de contact entre la zone de contact 22a/22b et la surface d'entrainement 9 est inférieure à une pression seuil assurant l'adhérence lorsque la zone de contact est dans la position inactive. La diminution de pression favorise le glissement de la zone de contact 22a/22b par rapport à la surface d'entrainement 9.

Dans la position active des bras, les déplacements de l'oscillateur 21 sont appliqués au rotor 1 comme cela a été expliqué précédemment.

Dans un mode de réalisation avantageux, les zones de contact 22a et 22b sont montées mobiles selon un rayon de la zone d'entrainement circulaire 9 pour basculer entre les positions actives et inactives. Préférentiellement, les zones de contact 22a et 22b sont montées mobiles à pivotement autour d'un axe monté sur l'excitateur 33, par exemple une liaison pivot 44a, 44b.

L'oscillateur 21 comporte un actionneur radial 45 configuré à basculer les bras de contact 50 entre les positions actives et inactives. De manière avantageuse, l'actionneur radial 45 est configuré pour déplacer radialement les bras de contact 50 par rotation pour basculer entre les positions actives et inactives L'actionneur radial 45 cause le déplacement du bras de contact 50 de manière à réaliser ou retirer le contact entre la zone de contact 22a, 22b et la zone d'entrainement 9.

Dans le mode de réalisation illustré, l'actionneur radial 45 est monté fixe sur l'excitateur 33 et l'axe de rotation ou le pivot44a, 44b du bras de contact 50 est monté fixe sur l'excitateur radial 45. De cette manière, les mouvements de l'excitateur 33 induisent des mouvements des bras de contact 50. Lorsqu'au moins un bras de contact 50 est en position active, les déformations angulaires de l'excitateur 33 sont appliquées au rotor 1 qui se déplace en rotation.

En déplaçant les zones de contact 22a, 22b entre les positions active et inactive, cela permet de moduler le diamètre d'un oscillateur 21.

Les bras 50 comportent préférentiellement des palettes magnétiques 51, préférentiellement en matériau ferromagnétique. L'actionnement des palettes magnétiques 51 cause la rotation du bras de contact 50 de manière à réaliser ou retirer le contact entre la zone de contact 22 et la zone d'entrainement 9.

Dans une forme particulière de réalisation, l'actionneur radial 45 est un actionneur électromagnétique de type électroaimant qui applique ou non une aimantation sur les palettes 51 pour déplacer les bras en rotation. Dans un mode de réalisation particulier, l'actionneur radial 45 possède un électroaimant. De manière préférentielle, l'actionneur radial 45 est formé d'un circuit magnétique avantageusement en matériau ferromagnétique présentant des pôles 46a et 46b, d'aimants permanents 47a et 47b aimantés suivant l'axe z et d'une bobine 49. Le circuit magnétique peut être formé par une pièce définissant un logement pour la bobine 49 et dont les parois latérales dirigent les lignes de champ vers la palette 51.

L'arbre de rotation ou le pivot 44 est préférentiellement un guidage flexible offrant un effet de rappel élastique. L'oscillateur 21 définit un trou central suivant l'axe z permettant le passage du rotor 1.

En alimentant la bobine 49, un champ magnétique se crée, les bras sont attirés et collés sur les pôles 46a, 46b de l'actionneur radial 45. Les aimants permanents 47a et 47b sont dimensionnés pour assister cette attraction. Par effet de bras de levier autour de la liaison pivot 44a, 44b, les zones de contact 22a, 22b appuient contre la surface d'entrainement 9 du rotor 1.

Dans un mode de réalisation particulier, hors alimentation de la bobine 49, les bras sont décollés des pôles 46a, 46b. Par effet de bras de levier autour de la liaison pivot 44a, 44b, la pression de contact des zones de contact 22a et 22b sont réduites, ce qui permet de minimiser le frottement entre l'oscillateur 21 et le rotor 1.

Dans une forme particulière de mise en œuvre, le contrôle par la bobine 49 au moyen du circuit 20 permet d'assurer une condition de décollement de l'oscillateur 21 vis-à-vis du rotor 1 ou tout au moins de réduire significativement la pression de contact.

Il est possible d'utiliser une surface d'entrainement ajourée ou continue. Si la surface d'entrainement est ajourée, il est préférable d'avoir des zones de contact dont la largeur est supérieure à la distance de séparation entre deux zones consécutives de la surface d'entrainement ou un nombre de zone de contact qui est supérieur au nombre de zones ajourés pour assurer un contact efficace quelle que soit la position de l'oscillateur par rapport à la surface d'entrainement.

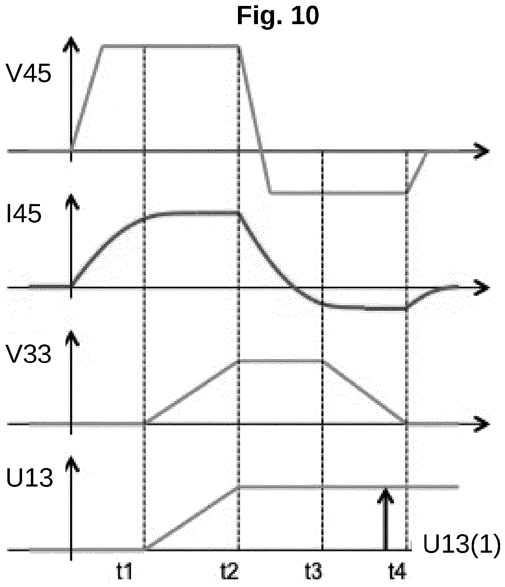

De manière avantageuse, le circuit de commande 20 alimente l'actionneur angulaire 33 et l'actionneur radial 45 de façon synchronisée. Par exemple, le chronogramme illustré à la figure 10 peut être utilisé pour d'obtenir un fonctionnement de type pas-à-pas quasi-statique.

A un instant t0, l'actionneur radial 45 est alimenté par une tension V45 et un courant I45, le bras de contact se déplace pour connecter mécaniquement l'oscillateur 21 avec la zone d'entrainement 9. L'oscillateur 21 n'est pas en mouvement et il se trouve dans une position de référence. L'arbre de sortie 13 est dans une position de référence.

Ensuite, à un instant t1, l'actionneur angulaire 33 est progressivement alimenté par une tension V33 ce qui génère une déformation de l'oscillateur 21 représentatif d'un mouvement en rotation. Le bras de contact assurant la liaison mécanique entre l'oscillateur 21 et le rotor 1, l'actionnement angulaire de l'oscillateur 21 depuis la position de référence est transmis au rotor 1 ce qui conduit à la réalisation d'un pas U13 de l'arbre de sortie 13, c'est-à-dire une translation selon l'axe z. L'arbre de sortie 13 s'est déplacé d'une distance U13 depuis la position de référence.

A l'instant t2, l'alimentation de l'actionneur radial 45 est réduite et préférentiellement inversée afin de produire un mouvement de contraction radial du bras de contact 50 et ainsi déconnecter mécaniquement l'oscillateur 21 vis-à-vis de la zone d'entrainement 9 ou tout au moins de réduire significativement la pression de contact de manière à autoriser le glissement de la zone 9 sur la surface 22. Il en est de même pour le courant alimentant l'actionneur radial 45. L'oscillateur est maintenu sous tension afin de maintenir sa déformation et éviter que le retour à la position de référence n'induise un déplacement du rotor 1 vers sa position initiale.

A l'instant t3, la tension V33 de l'actionneur angulaire 33 est progressivement réduite et ramenée à 0 afin de produire un mouvement de retour de l'actionneur angulaire 33. L'actionneur angulaire revient dans sa position de référence.

A l'instant t4, à la fin du cycle, lorsque les alimentations de l'actionneur radial 45 et de l'actionneur angulaire 33 sont coupées, l'arbre de sortie 13 a réalisé une translation qui représente un pas élémentaire noté U13(1) sur la figure 10.

En répétant plusieurs fois un tel cycle, c'est-à-dire plusieurs fois les enchainements des étapes t0 à t4, l'arbre de sortie 13 se déplace d'une pluralité de pas ce qui permet d'obtenir des grandes courses de l'arbre de sortie 13. Pour inverser le sens du mouvement, il suffit d'inverser le chronogramme d'alimentation de l'actionneur angulaire 33, c'est-à-dire de faire la séquence t1, t0, t3, t2, t4. Il est possible garder la séquence initiale en appliquant une tension de polarité opposée pour avoir un déplacement de l'oscillateur 21 dans l'autre sens.

Comme pour les modes de réalisation précédents, la course de l'actionneur angulaire 33 peut être réduite en réduisant la tension appliquée aux actionneurs piézoélectriques 37. Les débattements angulaires de l'oscillateur 21 peuvent ainsi être réduits. De plus, en exploitant un montage différentiel des pas du rotor 1, il est possible d'obtenir des translations nanométriques de l'arbre de sortie 13 et de la charge 14.

L'utilisation du bras 50 mobile radialement permet de gérer activement la pression de contact appliquée entre l'oscillateur 21 et la zone d'entrainement 9, jusqu'à être capable de décoller l'oscillateur 21 du rotor, et de permettre des entraînements du rotor 1 sans le moindre à-coup. L'utilisation du bras 50 mobile radialement permet de réduire la génération de micro-vibrations dans le mécanisme, ce qui est aussi recherché dans certaines applications de précision nanométrique.

Il est particulièrement avantageux de réaliser un système optique utilisant le mécanisme décrit plus haut, par exemple un interféromètre, un télescope, une caméra ou un système de pointage laser. Il est également avantageux de réaliser un émetteur ou un récepteur de signal électromagnétique qui comporte au moins une antenne conformable de télécommunication dont la conformation est obtenue par déplacement de la charge 14. Il est encore possible de former un système électro-fluidique tel que par exemple électrovannes de régulation ou la charge forme avantageusement le pointeau de l'électrovanne.

Ces mécanismes sont préférentiellement embarqués dans des satellites d'observation ou de communication, des avions, des hélicoptères et des lanceurs spatiaux car ils supportent des efforts élevés provoqués par la charge lors d'une accélération. Ces mécanismes présentent également un intérêt certains dans des applications maritimes et terrestres, par exemple dans des grands télescopes ou dans des équipements de photolithographie, pour motoriser avec précision des charges lourdes telles que des grands miroirs ou des grosses lentilles, sans risquer d'endommagement en cas de vibrations ambiantes ou de tremblements de terre.

## Revendications

1. Mécanisme de déplacement linéaire d'un arbre de sortie (13) comprenant :
- un rotor (1) présentant une première partie filetée (2) et une surface d'entraînement circulaire (9) mobile en rotation autour d'un axe (z);
- un cadre (10) définissant une première partie filetée (12) coopérant avec la première partie filetée (2) du rotor (1), la première partie filetée (2) du rotor (1) étant montée en liaison hélicoïdale avec la première partie filetée (12) du cadre (10) de sorte que la rotation du rotor (1) par rapport au cadre (10) cause la translation du rotor (1) par rapport au cadre (10) selon l'axe (z);
- un arbre de sortie (13) lié au rotor (1)
- un stator (19) configuré pour générer des micro-mouvements de rotation du rotor (1) autour de l'axe (z), le stator (19) possédant un oscillateur (21) avec une zone de contact (22) destinée à être mis en contact de la surface d'entraînement circulaire (9) pour déplacer la surface d'entraînement circulaire (9) et le rotor (1),
**caractérisé en ce que** :
- le rotor (1) comporte une deuxième partie filetée (6) séparée, selon l'axe z, de la première partie filetée (2) par une partie centrale (4) comprenant la surface d'entraînement circulaire (9),
- un dispositif de blocage (15) est configuré pour empêcher la rotation de l'arbre de sortie (13) autour de l'axe (z) par rapport au cadre (10),
- l'arbre de sortie (13) possède une deuxième partie (13b) configurée pour fixer une charge (14) à déplacer et une première extrémité filetée (13a) coopérant avec la deuxième partie filetée (6) du rotor (1), la première extrémité filetée (13a) de l'arbre de sortie (13) étant montée en liaison hélicoïdale avec la deuxième partie filetée du rotor (1) de sorte que la rotation du rotor (1) par rapport au cadre (10) cause la translation de l'arbre de sortie (13) par rapport au rotor (1) et au cadre (10) selon l'axe (z).

2. Mécanisme selon la revendication 1, **caractérisé en ce que** le rotor (1) définit une zone creuse et la surface d'entraînement circulaire (9) est une surface interne du rotor (1).

3. Mécanisme selon l'une des revendications précédentes, dans lequel le dispositif de blocage (15) est flexible selon l'axe (z) et dans lequel le dispositif de blocage (15) comporte avantageusement au moins une membrane ajourée formée de plusieurs lames minces agencées en nid d'abeille, en spirales, en croix ou en cercles concentriques.

4. Mécanisme selon l'une des revendications précédentes, dans lequel l'oscillateur (21) possède un excitateur (33) muni d'au moins un actionneur piézoélectrique (37) agencé pour déformer l'excitateur (33), l'oscillateur (21) étant alimenté par un circuit de contrôle (20) actionnant l'excitateur (33), la zone de contact (22) étant fixée à l'excitateur (33).

5. Mécanisme selon la revendication précédente, **caractérisé en ce que** l'excitateur (33) présente une symétrie de rotation dans un plan perpendiculaire à l'axe (z) et dans lequel l'excitateur (33) comporte un support (38) définissant plusieurs bras et plusieurs actionneurs piézoélectriques (37a, 37b, 37c), chaque actionneur piézoélectrique (37a, 37b, 37c) étant fixé à un bras du support (38) par une articulation flexible (39a, 39b, 39c).

6. Mécanisme selon la revendication 5, dans lequel les actionneurs piézoélectriques (37) possèdent chacun une coque (41) définissant un logement pour un empilement piézoélectrique (42), la coque (41) et l'empilement piézoélectrique (42) étant configurés de sorte qu'une déformation d'une première valeur de l'empilement piézoélectrique (42) selon une première direction cause une déformation de la coque (41) d'une deuxième valeur supérieure à la première valeur selon une seconde direction, la coque (41) étant connectée au support (38) selon la seconde direction.

7. Mécanisme selon la revendication précédente, dans lequel les coques (41) des actionneurs piézoélectriques (37) et le support (38) forment un ensemble monolithique.

8. Mécanisme selon l'une quelconque des revendications précédentes, **caractérisé en ce que** la surface d'entraînement circulaire (9) est ajourée et **en ce que** le stator (19) possède une masse oscillante (32) de forme circulaire définissant la zone de contact (22) en contact avec la surface d'entraînement circulaire (9).

9. Mécanisme selon la revendication précédente, dans lequel la surface d'entraînement circulaire (9) est définie par une pluralité de secteurs (23a, 23b, 23c) fixés à un arbre du rotor (1) par une pluralité de bras (24a, 24b, 24c), le mécanisme comportant un système de précharge (25) configuré pour appliquer une contrainte sur la pluralité de bras (24a, 24b, 24c) et moduler un rayon de la surface d'entraînement circulaire (9).

10. Mécanisme selon l'une quelconque des revendications 4 à 9, dans lequel l'oscillateur (21) est muni d'au moins un bras de contact (50) mobile radialement entre une position active où le au moins un bras de contact (50) est configuré pour appliquer une pression de contact avec la surface d'entraînement circulaire (9) supérieure à une pression seuil destinée à assurer l'adhérence entre le au moins un bras de contact (50) et la surface d'entrainement circulaire (9) et une position inactive dans laquelle le au moins un bras de contact (50) est dépourvu de contact avec la surface d'entraînement circulaire (9) ou dans laquelle le au moins un bras de contact (50) applique une pression de contact inférieure à ladite pression seuil et en ce que l'oscillateur (21) comporte un actionneur radial (45) alimenté par le circuit de contrôle (20) et configuré pour déplacer le au moins un bras de contact (50) entre la position active et la position inactive.

11. Mécanisme selon la revendication précédente, dans lequel le au moins un bras de contact (50) comporte une palette magnétique (51) et en ce que l'actionneur radial (45) possède une bobine (49) alimentée par le circuit de contrôle (20) et coopérant avec la palette magnétique (51) pour déplacer la palette magnétique (51) et le au moins un bras de contact (50) entre la position active et la position inactive, l'alimentation de la bobine (49) par le circuit de contrôle (20) créant un champ magnétique.

12. Mécanisme selon la revendication précédente, dans lequel le au moins un bras de contact (50) est monté mobile sur une liaison pivot (44) montée fixement sur l'excitateur (33).

13. Procédé d'utilisation d'un mécanisme de déplacement linéaire selon l'une des revendications 1 à 9 comportant successivement:
- déformer l'oscillateur (21) à une première vitesse de déformation pour causer un déplacement en rotation du rotor (1), l'oscillateur (21) se déformant depuis une position de référence et étant en contact mécanique adhérent avec la surface d'entrainement circulaire (9),
- déformer l'oscillateur (21) à une deuxième vitesse de déformation supérieure à la première vitesse de déformation pour rapprocher l'oscillateur (21) de la position de référence, la deuxième vitesse de rotation causant le glissement de l'oscillateur (21) par rapport à la surface d'entrainement circulaire (9).

14. Procédé d'utilisation d'un mécanisme de déplacement linéaire selon la revendication 13 comportant appliquer des signaux électriques alternatifs en dents de scie non symétriques aux actionneurs piézoélectriques (37).

15. Procédé d'utilisation d'un mécanisme de déplacement linéaire selon l'une des revendications 1 à 9 comportant l'application d'au moins un signal sinusoïdal à l'oscillateur (21), le signal sinusoïdal ayant une fréquence comprise entre 1kHz et 100kHz de manière à appliquer au moins une excitation harmonique sur le rotor (1) au moyen de l'oscillateur (21) pour générer une vibration sensiblement elliptique à la fréquence de résonance de l'oscillateur (21).

16. Procédé d'utilisation d'un mécanisme de déplacement linéaire selon l'une des revendications 10 à 12 comportant successivement :
- placer le au moins un bras de contact (50) dans la position active pour assurer le contact du au moins un bras de contact (50) et l'adhérence avec la surface d'entraînement circulaire (9),
- déformer l'oscillateur (21) depuis une position de référence pour obtenir une composante tangentielle à la surface cylindrique d'entraînement (9), la déformation de l'oscillateur (21) causant une rotation du rotor (1),
- placer le au moins un bras de contact (50) dans la position inactive pour supprimer le contact mécanique avec la surface d'entraînement circulaire (9), ou appliquer une pression de contact inférieure à un seuil d'adhérence entre le au moins un bras de contact (50) et la surface d'entraînement circulaire (9),
- replacer l'oscillateur (21) dans la position de référence.

## Patentansprüche

1. Mechanismus zur linearen Verlagerung einer Ausgangswelle (13), umfassend:
- einen Rotor (1), der einen ersten Gewindeabschnitt (2) und eine kreisförmige Antriebsfläche (9), die um eine Achse (z) drehbeweglich ist, aufweist;
- einen Rahmen (10), der einen ersten Gewindeabschnitt (12) definiert, der mit dem ersten Gewindeabschnitt (2) des Rotors (1) zusammenwirkt, wobei der erste Gewindeabschnitt (2) des Rotors (1) in Spiralverbindung mit dem ersten Gewindeabschnitt (12) des Rahmens (10) montiert ist, so dass die Drehung des Rotors (1) in Bezug zum Rahmen (10) die Translation des Rotors (1) in Bezug zum Rahmen (10) entlang der Achse (z) bewirkt;
- eine Ausgangswelle (13), die mit dem Rotor (1) verbunden ist,
- einen Stator (19), der eingerichtet ist, um Mikrodrehbewegungen des Rotors (1) um die Achse (z) zu erzeugen, wobei der Stator (19) einen Oszillator (21) mit einer Kontaktzone (22) besitzt, die dazu bestimmt ist, mit der kreisförmigen Antriebsfläche (9) in Kontakt gebracht zu werden, um die kreisförmige Antriebsfläche (9) und den Rotor (1) zu verlagern, **dadurch gekennzeichnet, dass**:
- der Rotor (1) einen zweiten Gewindeabschnitt (6) umfasst, der entlang der Achse (z) des ersten Gewindeabschnitts (2) durch einen zentralen Abschnitt (4), umfassend die kreisförmige Antriebsfläche (9), getrennt ist,
- eine Blockiervorrichtung (15) eingerichtet ist, um die Drehung der Ausgangswelle (13) um die Achse (z) in Bezug zum Rahmen (10) zu verhindern,
- die Ausgangswelle (13) einen zweiten Abschnitt (13b), der eingerichtet ist, um eine zu verlagernde Last (14) zu befestigen, und ein erstes Gewindeende (13a) besitzt, das mit dem zweiten Gewindeabschnitt (6) des Rotors (1) zusammenwirkt, wobei das erste Gewindeende (13a) der Ausgangswelle (13) in Spiralverbindung mit dem zweiten Gewindeabschnitt des Rotors (1) montiert ist, so dass die Drehung des Rotors (1) in Bezug zum Rahmen (10) die Translation der Ausgangswelle (13) in Bezug zum Rotor (1) und zum Rahmen (10) entlang der Achse (z) bewirkt.

2. Mechanismus nach Anspruch 1, **dadurch gekennzeichnet, dass** der Rotor (1) eine hohle Zone definiert, und dass die kreisförmige Antriebsfläche (9) eine Innenfläche des Rotors (1) ist.

3. Mechanismus nach einem der vorhergehenden Ansprüche, bei dem die Blockiervorrichtung (15) entlang der Achse (z) biegsam ist, und bei dem die Blockiervorrichtung (15) vorteilhafterweise mindestens eine durchbrochene Membran umfasst, die von mehreren dünnen Blättchen gebildet ist, die wabenartig, spiralförmig, kreuzförmig oder in konzentrischen Kreisen angeordnet sind.

4. Mechanismus nach einem der vorhergehenden Ansprüche, bei dem der Oszillator (21) einen Erreger (33) besitzt, der mit mindestens einem piezoelektrischen Aktuator (37) versehen ist, der dazu vorgesehen ist, den Erreger (33) zu verformen, wobei der Oszillator (21) von einer Steuerschaltung (20) versorgt wird, die den Erreger (33) betätigt, wobei die Kontaktzone (22) am Erreger (33) befestigt ist.

5. Mechanismus nach dem vorhergehenden Anspruch, **dadurch gekennzeichnet, dass** der Erreger (33) eine Drehsymmetrie in einer Ebene senkrecht auf die Achse (z) aufweist, und bei dem der Erreger (33) einen Träger (38) umfasst, der mehrere Arme und mehrere piezoelektrische Aktuatoren (37a, 37b, 37c) definiert, wobei jeder piezoelektrische Aktuator (37a, 37b, 37c) an einem Arm des Trägers (38) durch ein flexibles Gelenk (39a, 39b, 39c) befestigt ist.

6. Mechanismus nach Anspruch 5, bei dem die piezoelektrischen Aktuatoren (37) jeweils eine Schale (41) besitzen, die eine Aufnahme für einen piezoelektrischen Stapel (42) definiert, wobei die Schale (41) und der piezoelektrische Stapel (42) eingerichtet sind, dass eine Verformung des piezoelektrischen Stapels (42) um einen ersten Wert in eine erste Richtung eine Verformung der Schale (41) um einen zweiten Wert größer als der erste Wert in eine zweite Richtung bewirkt, wobei die Schale (41) an den Träger (38) in die zweite Richtung angeschlossen ist.

7. Mechanismus nach dem vorhergehenden Anspruch, bei dem die Schalen (41) der piezoelektrischen Aktuatoren (37) und der Träger (38) eine monolithische Einheit bilden.

8. Mechanismus nach einem der vorhergehenden Ansprüche, **dadurch gekennzeichnet, dass** die kreisförmige Antriebsfläche (9) durchbrochen ist, und dass der Stator (19) eine oszillierende Masse (32) von kreisförmiger Form besitzt, die die Kontaktzone (22) definiert, die mit der kreisförmigen Antriebsfläche (9) in Kontakt ist.

9. Mechanismus nach dem vorhergehenden Anspruch, bei dem die kreisförmige Antriebsfläche (9) durch eine Vielzahl von Sektoren (23a, 23b, 23c) definiert ist, die an einer Welle des Rotors (1) durch eine Vielzahl von Armen (24a, 24b, 24c) befestigt sind, wobei der Mechanismus ein Vorladesystem (25) umfasst, das eingerichtet ist, um eine Spannung an die Vielzahl von Armen (24a, 24b, 24c) anzulegen und einen Radius der kreisförmigen Antriebsfläche (9) zu modulieren.

10. Mechanismus nach einem der Ansprüche 4 bis 9, bei dem der Oszillator (21) mit mindestens einem Kontaktarm (50) versehen ist, der radial zwischen einer aktiven Position, in der der mindestens eine Kontaktarm (50) eingerichtet ist, um einen Kontaktdruck mit der kreisförmigen Antriebsfläche (9) auszuüben, der größer als ein Schwellendruck ist, der dazu bestimmt ist, die Haftung zwischen dem mindestens einen Kontaktarm (50) und der kreisförmigen Antriebsfläche (9) anzulegen, und einer inaktiven Position beweglich ist, in der der mindestens eine Kontaktarm (50) ohne Kontakt mit der kreisförmigen Antriebsfläche (9) ist, oder in der der mindestens eine Kontaktarm (50) einen Kontaktdruck anlegt, der geringer als der Schwellendruck ist, und bei dem der Oszillator (21) einen radialen Aktuator (45) umfasst, der von der Steuerschaltung (20) versorgt wird und eingerichtet ist, um den mindestens einen Kontaktarm (50) zwischen der aktiven Position und der inaktiven Position zu verlagern.

11. Mechanismus nach dem vorhergehenden Anspruch, bei dem der mindestens eine Kontaktarm (50) eine Magnetplatte (51) umfasst, und der radiale Aktuator (45) eine Spule (49) umfasst, die von der Steuerschaltung (20) versorgt wird und mit der Magnetplatte (51) zusammenwirkt, um die Magnetplatte (51) und den mindestens einen Kontaktarm (50) zwischen der aktiven Position und der inaktiven Position zu verlagern, wobei die Versorgung der Spule (49) durch die Steuerschaltung (20) ein Magnetfeld erzeugt.

12. Mechanismus nach dem vorhergehenden Anspruch, bei dem mindestens eine Kontaktarm (50) auf einer fest auf dem Erreger (33) montierten Schwenkverbindung (44) beweglich montiert ist.

13. Verfahren zur Verwendung eines Mechanismus zur linearen Verlagerung nach einem der Ansprüche 1 bis 9, umfassend nacheinander:
- Verformung des Oszillators (21) mit einer ersten Verformungsgeschwindigkeit, um eine Drehverlagerung des Rotors (1) zu bewirken, wobei sich der Oszillator (21) von einer Referenzposition aus verformt und mit der kreisförmigen Antriebsfläche (9) in mechanischem Haftkontakt ist,
- Verformung des Oszillators (21) mit einer zweiten Verformungsgeschwindigkeit, die höher als die erste Verformungsgeschwindigkeit ist, um den Oszillator (21) der Referenzposition anzunähern, wobei die zweite Drehgeschwindigkeit das Gleiten des Oszillators (21) in Bezug zur kreisförmigen Antriebsfläche (9) bewirkt.

14. Verfahren zur Verwendung eines Mechanismus zur linearen Verlagerung nach Anspruch 13, umfassend das Anlegen der nicht symmetrischen sägezahnartig wechselnden elektrischen Signale an die piezoelektrischen Aktuatoren (37).

15. Verfahren zur Verwendung eines Mechanismus zur linearen Verlagerung nach einem der Ansprüche 1 bis 9, umfassend das Anlegen mindestens eines Sinussignals an den Oszillator (21), wobei das Sinussignal eine Frequenz zwischen 1 kHz und 100 kHz hat, um mindestens eine harmonische Erregung an den Rotor (1) mit Hilfe des Oszillators (21) anzulegen, um eine im Wesentlichen elliptische Schwingung mit der Resonanzfrequenz des Oszillators (21) zu erzeugen.

16. Verfahren zur Verwendung eines Mechanismus zur linearen Verlagerung nach einem der Ansprüche 10 bis 12, umfassend nacheinander:
- das Anordnen von mindestens einen Kontaktarms (50) in der aktiven Position, um den Kontakt des mindestens einen Kontaktarms (50) und die Haftung mit der kreisförmigen Antriebsfläche (9) zu gewährleisten,
- das Verformen des Oszillators (21) von einer Referenzposition aus, um eine Tangentialkomponente an die kreisförmige Antriebsfläche (9) zu erhalten, wobei die Verformung des Oszillators (21) eine Drehung des Rotors (1) bewirkt,
- das Anordnen des mindestens einen Kontaktarms (50) in der inaktiven Position, um den mechanischen Kontakt mit der kreisförmigen Antriebsfläche (9) zu verhindern oder einen Kontaktdruck anzulegen, der geringer als ein Haftungsgrenzwert zwischen dem mindestens einen Kontaktarms (50) und der kreisförmigen Antriebsfläche (9) ist,
- das Wiederanordnen des Oszillators (21) in der Referenzposition.

## Claims

1. Linear motion control mechanism of an output shaft (13) comprising:
- a rotor (1) presenting a first threaded part (2) and a circular drive surface (9) rotatable around an axis (z);
- a frame (10) defining a first threaded part (12) collaborating with the first threaded part (2) of the rotor (1), the first threaded part (2) of the rotor (1) being fitted so as to form an helical connection with the first threaded part (12) of the frame (10) so that rotation of the rotor (1) with respect to the frame (10) causes translation of the rotor (1) with respect to the frame (10) along the axis (z);
- an output shaft (13) connected to the rotor (1),
- a stator (19) configured to generate rotational micro-movements of the rotor (1) around the axis (z), the stator (19) having an oscillator (21) with a contact area (22) designed to be placed in contact with the circular drive surface (9) to move the circular drive surface (9) and rotor (1),
**characterised in that**:
- the rotor (1) comprises a second threaded part (6) separated from the first threaded part (2), along the axis (z), by a central part (4) comprising the circular drive surface (9),
- a blocking device (15) is configured to prevent rotation of the output shaft (13) around the axis (z) with respect to the frame (10),
- the output shaft (13) has a second part (13b) configured to fix a load (14) to be moved and a first threaded part (13a) collaborating with the second threaded part (6) of the rotor (1), the first threaded part (13a) of the output shaft (13) being fitted so as to form an helical connection with the second threaded part (6) of the rotor (1) so that rotation of the rotor (1) with respect to the frame (10) causes translation of the output shaft (13) with respect to the rotor (1) and frame (10) along the axis (z).

2. Mechanism according to claim 1, **characterised in that** the rotor (1) defines a hollow area and the circular drive surface (9) is an inner surface of the rotor (1).

3. Mechanism according to anyone of the preceding claims, wherein the blocking device (15) is flexible along the axis (z) and wherein the blocking device (15) advantageously comprises at least one partially open membrane formed by several thin blades arranged in the form of a honeycomb, spirals, a cross or concentric circles.

4. Mechanism according to anyone of the preceding claims, wherein the oscillator (21) has an exciter (33) provided with at least one piezoelectric actuator (37) arranged to deform the exciter (33), the oscillator (21) being supplied by a control circuit (20) actuating the exciter (33), the contact area (22) being fixed to the exciter (33).

5. Mechanism according to the preceding claim, **characterised in that** the exciter (33) presents a rotational symmetry in a plane perpendicular to the axis (z) and wherein the exciter (33) comprises a support (38) defining several arms and several piezoelectric actuators (37a, 37b, 37c), each piezoelectric actuator (37a, 37b, 37c) being fixed to an arm of the support (38) by a flexible articulation (39a, 39b, 39c).

6. Mechanism according to claim 5, wherein the piezoelectric actuators (37) each have a shell (41) defining a housing for a piezoelectric stack (42), the shell (41) and piezoelectric stack (42) being configured so that a deformation by a first value of the piezoelectric stack (42) in a first direction causes a deformation of the shell (41) by a second value higher than the first value in a second direction, the shell (41) being connected to the support (38) in the second direction.

7. Mechanism according to the preceding claim, wherein the shells (41) of the piezoelectric actuators (37) and the support (38) form a monolithic assembly.

8. Mechanism according to anyone of the preceding claims, **characterised in** the circular drive surface (9) is segmented and **in that** the stator (19) has an oscillating mass (32) of circular shape defining the contact area (22) in contact with the circular drive surface (9).

9. Mechanism according to the preceding claim, wherein the circular drive surface (9) is defined by a plurality of sectors (23a, 23b, 23c) fixed to a shaft of the rotor (1) by a plurality of arms (24a, 24b, 24c), the mechanism comprising a preloading system (25) configured to apply a stress on the plurality of arms (24a, 24b, 24c) and to modify a radius of the circular drive surface (9).

10. Mechanism according to anyone of claims 4 to 9, wherein the oscillator (21) is provided with at least one contact arm (50) radially movable between an active position where the at least one contact arm (50) is configured to apply a contact pressure with the circular drive surface (9) higher than a threshold pressure designed to ensure the adhesion between the at least one contact arm (50) and the circular drive surface (9) and an inactive position in which the at least one contact arm (50) does not have any contact with the circular drive surface (9) or in which the at least one contact arm (50) applies a contact pressure lower than said threshold pressure, and in that the oscillator (21) comprises a radial actuator (45) supplied by the control circuit (20) and configured to move the at least one contact arm (50) between the active position and the inactive position.

11. Mechanism according to the preceding claim, wherein the at least one contact arm (50) comprises a magnetic armature (51) and in that the radial actuator (45) has a coil (49) supplied by the control circuit (20) and collaborating with a magnetic armature (51) to move the magnetic armature (51) and the at least one contact arm (50) between the active position and the inactive position, the power supply to the coil (49) by the control circuit (20) creating a magnetic field.

12. Mechanism according to the preceding claim, wherein the at least one contact arm (50) is mounted movable on a pivot link (44) fitted in fixed manner on the exciter (33).

13. Method for using a linear motion control mechanism according to one of claims 1 to 9 successively comprising:
- deforming the oscillator (21) with a first deformation rate to cause a rotational movement of the rotor (1), the oscillator (21) being deformed from a reference position and being in adherent mechanical contact with the circular drive surface (9),
- deforming the oscillator (21) with a second deformation rate higher than the first deformation rate to drive the oscillator (21) towards the reference position, the second deformation rate causing sliding of the oscillator (21) with respect to the circular drive surface (9).

14. Method for using a linear motion control mechanism according to claim 13 comprising applying non-symmetrical sawtooth AC electric signals to the piezoelectric actuators (37).

15. Method for using a linear motion control mechanism according to one of claims 1 to 9 comprising application of at least one sinusoidal signal to the oscillator (21), the sinusoidal signal having a frequency comprised between 1kHz and 100kHz so as to apply at least one harmonic excitation on the rotor (1) by means of the oscillator (21) to generate a substantially elliptical vibration at the resonance frequency of the oscillator (21).

16. Method for using a linear motion control mechanism according to one of claims 10 to 12 successively comprising:
- placing the at least one contact arm (50) in the active position to achieve contact of the at least one contact arm (50) and adhesion with the circular drive surface (9),
- deforming the oscillator (21) from a reference position to obtain a component tangential to the cylindrical drive surface (9), deformation of the oscillator (21) causing rotation of the rotor (1),
- placing the at least one contact arm (50) in the inactive position to eliminate the mechanical contact with the circular drive surface (9), or applying a contact pressure lower than an adhesion threshold pressure between the at least one contact arm (50) and the circular drive surface (9),
- moving the oscillator (21) back to the reference position.
